(19) Europäisches Patentamt / European Patent Office / Office européen des brevets

(11) **EP 2 080 793 B1**

(12) **EUROPEAN PATENT SPECIFICATION**

(45) Date of publication and mention
of the grant of the patent:
**29.08.2012 Bulletin 2012/35**

(21) Application number: **07831567.8**

(22) Date of filing: **09.11.2007**

(51) Int Cl.:
*C09J 7/02* (2006.01)          *B32B 27/00* (2006.01)
*B32B 27/30* (2006.01)        *C09J 11/02* (2006.01)
*C09J 133/08* (2006.01)

(86) International application number:
**PCT/JP2007/071836**

(87) International publication number:
**WO 2008/056788 (15.05.2008 Gazette 2008/20)**

(54) **THERMALLY FOAMABLE REPEELABLE ACRYLIC PRESSURE-SENSITIVE ADHESIVE TAPE OR SHEET**

THERMISCH AUFSCHÄUMBARES, WIEDERABZIEHBARES HAFTKLEBEBAND ODER FLÄCHENGEBILDE AUF ACRYLBASIS

BANDE OU FEUILLE ADHÉSIVE AUTOCOLLANTE ACRYLIQUE REPOSITIONNABLE THERMOEXPANSIBLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **10.11.2006  JP 2006305307**

(43) Date of publication of application:
**22.07.2009  Bulletin 2009/30**

(73) Proprietor: **Nitto Denko Corporation**
**Ibaraki-shi, Osaka 567-8680 (JP)**

(72) Inventors:
• **NAGASAKI, Kunio**
**Ibaraki-shi 567-8680, Osaka (JP)**
• **HIRAO, Akira**
**Ibaraki-shi 567-8680, Osaka (JP)**

(74) Representative: **Grünecker, Kinkeldey,**
**Stockmair & Schwanhäusser**
**Leopoldstrasse 4**
**80802 München (DE)**

(56) References cited:
**EP-A2- 1 592 058          JP-A- 02 187 478**
**JP-A- 06 503 848          JP-A- 2003 064 329**
**JP-A- 2005 179 561       JP-A- 2006 022 189**
**JP-A- 2006 265 368**

**Description**

TECHNICAL FIELD

The present invention relates to a thermally-foamable re-releasable acrylic pressure-sensitive adhesive tape or sheet that is reduced in the adhesive strength by heating at the peeling while maintaining a high normal-state adhesive strength at the bonding.

BACKGROUND ART

Conventionally, the base polymer for use in an acrylic pressure-sensitive adhesive has been prepared by solution polymerization of an acrylic monomer mainly including an alkyl (meth)acrylate. In recent years, restrictions on air pollution or environmental concern become an issue, and out of consideration to the global environment, it is particularly advantageous from the aspects of safety and environment to produce a pressure-sensitive adhesive tape or sheet (hereinafter, the "tape or sheet" is sometimes simply referred to as a "tape" or a "sheet") in which a pressure-sensitive adhesive layer is solventlessly formed by ultraviolet polymerization of an acrylic monomer. Furthermore, recent growth in environmental awareness increasingly requires resource saving or recycling.

On the other hand, an acrylic foam-like pressure-sensitive adhesive tape (an acrylic pressure-sensitive adhesive tape containing microparticles in the substrate and/or the pressure-sensitive adhesive layer) is often used in the application requiring adhesive strength at ordinary temperature or shear strength of a pressure-sensitive adhesive tape having a pressure-sensitive adhesive layer containing microparticles, for example, for bonding members in various fields such as automobile, machinery part, electric appliance and building material.

Under these circumstances, the conventional acrylic foam-like pressure-sensitive adhesive tape ensures bonding reliability by virtue of its high adhesive strength, but this high bonding strength conversely makes it difficult to separate or disassemble the bonded part.

As for such a conventionally known acrylic foam-like pressure-sensitive adhesive tape, there is disclosed a pressure-sensitive adhesive tape where glass microbubbles (hollow microspheres) are dispersed in the composition for forming a pressure-sensitive adhesive layer or an acrylic pressure-sensitive adhesive layer (see, Patent Documents 1 and 2). This foam-like tape exhibits very high peel strength but is disadvantageous in that the tape cannot be easily peeled off at the peeling because of its high peel strength.

Also, Patent Document 3 discloses a thermally-releasable pressure-sensitive adhesive tape obtained by coating a substrate with a photocurable pressure-sensitive adhesive having added thereto foaming agent particles. However, it is difficult to realize excellent normal-state adhesive strength and easy peeling force after heating.

Furthermore, Patent Document 4 discloses a laminate obtained by sequentially stacking foaming agent-containing crosslinkable polymers on a substrate. However, sufficiently high initial pressure-sensitive adhesive strength can be hardly realized and moreover, when the initial pressure-sensitive adhesive strength is increased, the pressure-sensitive adhesive strength is not sufficiently decreased by the heating. In any way, it is difficult to satisfy both excellent normal-state adhesive strength and easy peeling force after heating.

Patent Document 5 discloses a pressure-sensitive adhesive sheet obtained by coating a substrate with a pressure-sensitive adhesive agent layer having added thereto a thermally-expandable compound. This pressure-sensitive adhesive sheet exhibits easy releasability even by heating at a relatively low temperature. However, it is difficult to satisfy both excellent normal-state adhesive strength and easy peeling force after heating.

In addition, Patent Documents 6 and 7 disclose a thermally-releasable pressure-sensitive adhesive sheet in which a pressure-sensitive adhesive layer containing a radiation-polymerizable acrylic pressure-sensitive adhesive and a thermal foaming agent is provided. However, it is difficult to satisfy both excellent normal-state adhesive strength and easy peeling force after heating.

|  |  |
|---|---|
| Patent Document 1: | JP-B-57-17030 (corresponding to U.S. Patent 4,223,067) |
| Patent Document 2: | JP-A-7-48549 |
| Patent Document 3: | JP-A-2001-212900 |
| Patent Document 4: | JP-A-2002-088320 |
| Patent Document 5: | JP-A-2002-003800 |
| Patent Document 6: | JP-A-2002-121505 |
| Patent Document 7: | JP-A-2004-018761 |

## DISCLOSURE OF THE INVENTION

Accordingly, an object of the present invention is to provide a thermally-foamable re-releasable acrylic pressure-sensitive adhesive tape that can be, despite an acrylic pressure-sensitive adhesive tape having foaming property, easily separated or disassembled by reducing the adhesive strength under heating at the separation or disassembling of the bonded part while maintaining a high normal-state adhesive strength at the bonding.

As a result of intensive studies to solve those problems, the present inventors have found that in a pressure-sensitive adhesive tape having a pressure-sensitive adhesive layer on at least one surface of a substrate, when a thermal foaming agent-containing pressure-sensitive adhesive layer formed of a thermal foaming agent-containing pressure-sensitive adhesive composition is stacked on at least one surface of a microparticle-containing viscoelastic substrate serving as backing, a re-releasable pressure-sensitive adhesive tape that can be easily separated or disassembled by reducing the adhesive strength under heating at the separation or disassembling of the bonded part while maintaining a high normal-state adhesive strength at the bonding, can be obtained. The present invention has been accomplished based on this finding.

That is, the present invention provides a thermally-foamable re-releasable acrylic pressure-sensitive adhesive tape or sheet including a microparticle-containing viscoelastic substrate and a thermal foaming agent-containing pressure-sensitive adhesive layer provided on at least one surface of the microparticle-containing viscoelastic substrate.

The microparticle-containing viscoelastic substrate is preferably a layer obtained by polymerizing a microparticle-containing polymerizable composition containing a vinyl monomer mixture including as a main component an alkyl (meth)acrylate having an alkyl group which has a carbon number of 2 to 18, or a partial polymerization product thereof, a photopolymerization initiator, microparticles, and a polyfunctional (meth)acrylate. Also, the microparticle-containing polymerizable composition preferably contains 0.001 to 5 parts by weight of the photopolymerization initiator and 0.001 to 5 parts by weight of the polyfunctional (meth)acrylate, based on 100 parts by weight of total monomer components in the vinyl monomer mixture including as the main component an alkyl (meth)acrylate having an alkyl group which has a carbon number of 2 to 18, or a partial polymerization product thereof.

The average particle diameter of microparticles in the microparticle-containing viscoelastic substrate is preferably 1 to 500 $\mu$m, more preferably 30 to 100 $\mu$m. Also, the content of microparticle in the microparticle-containing viscoelastic substrate is preferably 5 to 50% by volume based on the total volume of the microparticle-containing viscoelastic substrate.

The thermal foaming agent-containing pressure-sensitive adhesive layer is preferably a layer obtained by polymerizing a thermal foaming agent-containing pressure-sensitive adhesive composition containing a vinyl monomer mixture including as a main component an alkyl (meth)acrylate having an alkyl group which has a carbon number of 2 to 18, or a partial polymerization product thereof, a photopolymerization initiator, a thermal foaming agent and a polyfunctional (meth)acrylate, and the gel fraction of the thermal foaming agent-containing pressure-sensitive adhesive layer is preferably 50 to 99 wt%. Also, the thermal foaming agent-containing pressure-sensitive adhesive composition preferably contains 0.001 to 5 parts by weight of the photopolymerization initiator, 5 to 60 parts by weight of the thermal foaming agent and 0.001 to 5 parts by weight of the polyfunctional (meth)acrylate, based on 100 parts by weight of total monomer components in the vinyl monomer mixture including as the main component an alkyl (meth)acrylate having an alkyl group which has a carbon number of 2 to 18, or a partial polymerization product thereof.

The thermal foaming agent in the thermal foaming agent-containing pressure-sensitive adhesive layer is preferably a thermally-expandable microsphere.

The thickness of the thermal foaming agent-containing pressure-sensitive adhesive layer is preferably 1 to 300 $\mu$m, more preferably 30 to 200 $\mu$m.

The microparticle-containing polymerizable composition preferably further contains a copolymerizable monomer.

The thermal foaming agent-containing pressure-sensitive adhesive composition preferably further contains a copolymerizable monomer.

By virtue of having the above-described constructions, the thermally-foamable re-releasable acrylic pressure-sensitive adhesive tape of the present invention can be easily separated or disassembled by reducing the adhesive strength under heating at the separation or disassembling of the bonded part while maintaining a high normal-state adhesive strength at the bonding.

## BRIEF DESCRIPTION OF THE DRAWINGS

Fig. 1 is a schematic cross-sectional view illustrating one example of the process of producing the thermally-foamable re-releasable acrylic pressure-sensitive adhesive tape.

Fig. 2 is a schematic cross-sectional view illustrating another example of the process of producing the thermally-foamable re-releasable acrylic pressure-sensitive adhesive tape.

Fig. 3 is a schematic cross-sectional view illustrating still another example of the process of producing the thermally-foamable re-releasable acrylic pressure-sensitive adhesive tape.

Fig. 4 is a scanning electron micrograph of the surface of the thermal foaming agent-containing pressure-sensitive adhesive layer in normal state (before heating and foaming) of the thermally-foamable re-releasable acrylic pressure-sensitive adhesive tape of Example 4.

Fig. 5 is a scanning electron micrograph of the surface of the thermal foaming agent-containing pressure-sensitive adhesive layer after heating and foaming of the thermally-foamable re-releasable acrylic pressure-sensitive adhesive tape of Example 4.

Fig. 6 is a photograph of the surface of the thermal foaming agent-containing pressure-sensitive adhesive layer in normal state (before heating and foaming) of the thermally-foamable re-releasable acrylic pressure-sensitive adhesive tape of Example 4.

Fig. 7 is a photograph of the surface of the thermal foaming agent-containing pressure-sensitive adhesive layer after heating and foaming of the thermally-foamable re-releasable acrylic pressure-sensitive adhesive tape of Example 4.

Fig. 8 is a scanning electron micrograph of the cross-section of the thermal foaming agent-containing pressure-sensitive adhesive layer in normal state (before heating and foaming) of the thermally-foamable re-releasable acrylic pressure-sensitive adhesive tape of Example 4.

Fig. 9 is a scanning electron micrograph of the cross-section of the thermal foaming agent-containing pressure-sensitive adhesive layer after heating and foaming of the thermally-foamable re-releasable acrylic pressure-sensitive adhesive tape of Example 4.

DESCRIPTION OF REFERENCE NUMERALS AND SIGNS

1a: First step in Production Process Example 1
1b: Second step in Production Process Example I
1c: Third step in Production Process Example 1
1d: Fourth step in Production Process Example 1
1e: Thermally-foamable re-releasable acrylic pressure-sensitive adhesive tape produced in Production Process Example 1
2a: First step in Production Process Example 2
2b: Second step in Production Process Example 2
2c: Third step in Production Process Example 2
2d: Fourth step in Production Process Example 2
2e: Thermally-foamable re-releasable acrylic pressure-sensitive adhesive tape produced in Production Process Example 2
3a: First step in Production Process Example 3
3b: Second step in Production Process Example 3
3c: Third step in Production Process Example 3
3d: Fourth step in Production Process Example 3
3e: Thermally-foamable re-releasable acrylic pressure-sensitive adhesive tape produced in Production Process Example 3
11 Microparticle-containing polymerizable composition layer
12 Thermal foaming agent-containing pressure-sensitive adhesive composition layer
13 Release liner
14 Thermal foaming agent-containing pressure-sensitive adhesive layer
15 Microparticle-containing viscoelastic substrate
16 Active energy ray
17 Thermally-foamable re-releasable acrylic pressure-sensitive adhesive tape (single-sided type)
18 Thermally-foamable re-releasable acrylic pressure-sensitive adhesive tape (double-sided type)

BEST MODE FOR CARRYING OUT THE INVENTION

Thermally-foamable Re-Releasable Acrylic Pressure-sensitive adhesive Tape

The thermally-foamable re-releasable acrylic pressure-sensitive adhesive tape of the present invention is a pressure-sensitive adhesive tape having a thermal foaming agent-containing pressure-sensitive adhesive layer on one surface or both surfaces of a microparticle-containing viscoelastic substrate, and this pressure-sensitive adhesive tape has a property of decreasing in the adhesive strength at the peeling while maintaining a high normal-state adhesive strength at the bonding to an adherend and is intended to be re-releasable. Also, for the purpose of protecting the pressure-sensitive adhesive surface of the pressure-sensitive adhesive layer, the pressure-sensitive adhesive tape preferably has a release liner (separator) on the pressure-sensitive adhesive layer.

Incidentally, the thermally-foamable re-releasable acrylic pressure-sensitive adhesive tape may have other layers (for example, an intermediate layer and an undercoat layer) within the range not impairing the effects of the present invention.

The intermediate layer includes, for example, an intermediate layer consisting of one layer or two or more layers provided between the microparticle-containing viscoelastic substrate and the thermal foaming agent-containing pressure-sensitive adhesive layer. Examples of the intermediate layer include a release agent coating layer for imparting releasability, a primer coating layer for enhancing the adhering force, a layer for imparting good deformability, a layer for increasing the adhesion area to an adherend, a layer for enhancing the adhesive strength to an adherend, a layer for allowing good followability to the surface shape of an adherend, a layer for enhancing the performance of reducing the adhesive strength by heating, and a layer for enhancing the releasability after heating.

The thermally-foamable re-releasable acrylic pressure-sensitive adhesive tape of the present invention may take a double-sided pressure-sensitive adhesive sheet form where both surfaces are a pressure-sensitive adhesive surface, or a single-sided pressure-sensitive adhesive sheet form where only one surface is a pressure-sensitive adhesive surface. In the case where the thermally-foamable re-releasable acrylic pressure-sensitive adhesive tape is in a double-sided pressure-sensitive adhesive sheet form, pressure-sensitive adhesive surfaces may be provided only by the thermal foaming agent-containing pressure-sensitive adhesive layer or only one pressure-sensitive adhesive surface may be provided by the thermal foaming agent-containing pressure-sensitive adhesive layer, while providing another pressure-sensitive adhesive surface by a pressure-sensitive adhesive layer other than the thermal foaming agent-containing pressure-sensitive adhesive layer (sometimes referred to as a "thermal foaming agent-non-containing pressure-sensitive adhesive layer"). The thermal foaming agent-non-containing pressure-sensitive adhesive layer may be formed using a known pressure-sensitive adhesive (e.g., acrylic pressure-sensitive adhesive, rubber-based pressure-sensitive adhesive, vinyl alkyl ether-based pressure-sensitive adhesive, silicone-based pressure-sensitive adhesive, polyester-based pressure-sensitive adhesive, polyamide-based pressure-sensitive adhesive, urethane-based pressure-sensitive adhesive, fluorine-based pressure-sensitive adhesive, epoxy-based pressure-sensitive adhesive) by utilizing a known formation method for a pressure-sensitive adhesive layer. The thickness of the thermal foaming agent-non-containing pressure-sensitive adhesive layer is not particularly limited and may be appropriately selected according to the purpose, usage and the like.

Further, the thermally-foamable re-releasable acrylic pressure-sensitive adhesive tape of the present invention may also take a form of being wound into a roll or a form of sheets being stacked. That is, the thermally-foamable re-releasable acrylic pressure-sensitive adhesive tape can have a form such as sheet or tape. The thermally-foamable re-releasable acrylic pressure-sensitive adhesive tape in a state or form of being wound into a roll may be in a state or form of being wound into a roll while protecting the pressure-sensitive adhesive surface with a release liner (separator) or in a state or form of being wound into a roll while protecting the pressure-sensitive adhesive surface with a release-treated layer (back treated layer) formed on another surface of the support. Examples of the release agent include a silicone-based release agent and a long-chain alkyl-based release agent.

Microparticle-Containing Viscoelastic Substrate

The microparticle-containing viscoelastic substrate is a layer obtained by polymerizing a microparticle-containing polymerizable composition, but as long as microparticles are contained in the substrate and the substrate has viscoelastic property, the substrate is not particularly limited. The base polymer in the microparticle-containing polymerizable composition is also not particularly limited as long as the microparticle-containing viscoelastic substrate formed contains microparticles in the substrate and the substrate has viscoelastic property.

In the case where the microparticle-containing polymerizable composition is a pressure-sensitive adhesive composition containing microparticles (microparticle-containing pressure-sensitive adhesive composition), the base polymer which can be used may be appropriately selected from base polymers in pressure-sensitive adhesives (adhesives) such as acrylic pressure-sensitive adhesive, rubber-based pressure-sensitive adhesive, vinyl alkyl ether-based pressure-sensitive adhesive, silicone-based pressure-sensitive adhesive, polyester-based pressure-sensitive adhesive, polyamide-based pressure-sensitive adhesive, urethane-based pressure-sensitive adhesive, fluorine-based pressure-sensitive adhesive and epoxy-based pressure-sensitive adhesive.

A base polymer may be used alone or in combination thereof. A base polymer in an acrylic pressure-sensitive adhesive may be suitably used as the base polymer. The acrylic pressure-sensitive adhesive usually contains an acrylic polymer as the base polymer. That is, the microparticle-containing polymerizable composition for forming the microparticle-containing viscoelastic substrate is preferably a microparticle-containing polymerizable composition where the base polymer is an acrylic polymer including an acrylic monomer as the main component. In particular, a microparticle-containing polymerizable composition constituted by a vinyl monomer mixture or a partial polymerization product thereof, a photopolymerization initiator, microparticles and a polyfunctional (meth)acrylate is preferred.

The vinyl-based monomer for use in the microparticle-containing polymerizable composition is not particularly limited as long as the monomer has an unsaturated double bond and is capable of radical polymerization (radical polymerizable monomer), but in view of reactivity, the monomer is preferably an acrylic monomer. Among acrylic monomers, an alkyl (meth)acrylate having an alkyl group which has a carbon number of 2 to 18 is preferred. That is, the main component of the vinyl monomer mixture or a partial polymerization product thereof used in the microparticle-containing polymerizable composition is preferably an acrylic monomer, more preferably an alkyl (meth)acrylate having an alkyl group which has a carbon number of 2 to 18.

Examples of the alkyl (meth)acrylate having an alkyl group which has a carbon number of 2 to 18 include ethyl (meth)acrylate, n-propyl (meth)acrylate, isopropyl (meth)acrylate, n-butyl (meth)acrylate, sec-butyl (meth)acrylate, tert-butyl (meth)acrylate, n-octyl (meth)acrylate, isooctyl (meth)acrylate, 2-ethylhexyl (meth)acrylate, isononyl (meth)acrylate, decyl (meth)acrylate and isostearyl (meth)acrylate. One kind or two or more kinds of these alkyl (meth)acrylates are used.

In the microparticle-containing polymerizable composition, a copolymerizable monomer may also be used together with the vinyl-based monomer (particularly an acrylic monomer). That is, in the vinyl monomer mixture or a partial polymerization product thereof contained in the microparticle-containing polymerizable composition, a copolymerizable monomer may be contained. Examples of the copolymerizable monomer include a carboxyl group-containing monomer such as acrylic acid, methacrylic acid, carboxyethyl acrylate, carboxypentyl acrylate, itaconic acid, maleic acid and crotonic acid; a hydroxyl group-containing monomer such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methylacrylate; an acid anhydride monomer such as maleic anhydride and itaconic anhydride; a sulfonic acid group-containing monomer such as 2-acrylamido-2-methylpropanesulfonic acid and sulfopropyl acrylate; a phosphoric acid group-containing monomer such as 2-hydroxyethylacryloyl phosphate; an amide-based monomer such as (meth)acrylamide and N-substituted (meth)acrylamide (e.g., N-methylolacrylamide); a succinimide-based monomer such as N-(meth)acryloyloxymethylene succinimide, N-(meth)acryloyl-6-oxyhexamethylene succinimide and N-(meth)acryloyl-8-oxyoctamethylene succinimide; a vinyl-based monomer such as vinyl acetate, N-vinylpyrrolidone, N-vinylcarboxylic acid amides, styrene and N-vinylcaprolactam; a cyanoacrylate-based monomer such as acrylonitrile and methacrylonitrile; an acrylic acid ester-based monomer such as glycidyl (meth)acrylate, tetrahydrofurfuryl (meth)acrylate, polyethylene glycol (meth)acrylate, polypropylene glycol (meth)acrylate, fluorine (meth)acrylate, silicone (meth)acrylate and 2-methoxyethyl acrylate; an alkyl (meth)acrylate having an alkyl group different from that in the above-described alkyl (meth)acrylate as the main component, such as methyl (meth)acrylate and octadecyl (meth)acrylate; and an alicyclic acrylate such as isobornyl (meth) acrylate. These copolymerizable monomers may be used alone or in combination thereof.

In the case where a copolymerizable monomer is used in the vinyl monomer mixture or a partial polymerization product thereof constituting the microparticle-containing polymerizable composition, the monomer mixture preferably contains 60 to 99.9 wt% of a vinyl monomer and 0.1 to 40 wt% of a copolymerizable monomer, more preferably 80 to 99.5 wt% of a vinyl monomer and 0.5 to 20 wt% of a copolymerizable monomer, still more preferably 90 to 99 wt% of a vinyl-based monomer and 1 to 10 wt% of a copolymerizable monomer.

The copolymerizable monomer is preferably a hydroxyl group-containing monomer or a carboxyl group-containing monomer, more preferably an acrylic acid. The amount of the copolymerizable monomer is preferably 1 to 10 wt%. By the use in this range, the adhesive strength can be enhanced.

In the microparticle-containing polymerizable composition, various polymerization initiators (for example, a thermal polymerization initiator or a photopolymerization initiator) can be used as the polymerization initiator without limitation. In particular, a photopolymerization initiator may be suitably used, because the polymerization time can be shortened.

At the production of the microparticle-containing viscoelastic substrate, when a microparticle-containing polymerizable composition containing a polymerization initiator such as thermal polymerization initiator or photopolymerization initiator is used, a curing reaction by heat or an active energy ray can be utilized and therefore, the microparticle-containing viscoelastic substrate can be formed by curing the microparticle-containing polymerizable composition in a state of microparticles being mixed therein. That is, a microparticle-containing substrate having a structure where mi-

6

croparticles are stably contained can be easily obtained. In the present invention, since a photopolymerization initiator is preferably used as the polymerization initiator, the microparticle-containing viscoelastic substrate having a stable microparticle-containing structure is preferably produced by utilizing a polymerization reaction (photocuring reaction) using an active energy ray. Incidentally, a polymerization initiator may be used alone or in combination thereof.

The photopolymerization initiator used in the microparticle-containing polymerizable composition is not particularly limited, and examples of the photopolymerization initiator which can be used include a benzoin ether-based photopolymerization initiator, an acetophenone-based photopolymerization initiator, an $\alpha$-ketol-based photopolymerization initiator, an aromatic sulfonyl chloride-based photopolymerization initiator, an optically active oxime-based photopolymerization initiator, a benzoin-based photopolymerization initiator, a benzyl-based photopolymerization initiator, a benzophenone-based photopolymerization initiator, a ketal-based photopolymerization initiator and a thioxanthone-based photopolymerization initiator.

Specifically, examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone and 4-tert-butyl-dichloroacetophenone. Examples of the $\alpha$-ketol-based photopolymerization initiator include 2-methyl-2-hydroxypropiophenone and 1-[4-(2-hydroxyethyl)-phenyl]-2-hydroxy-2-methylpropan-1-one. Examples of the aromatic sulfonyl chloride-based photopolymerization initiator include 2-naphthalenesulfonyl chloride. Examples of the optically active oxime-based photopolymerization initiator include 1-phenyl-1,1-propanedione-2-(o-ethoxycarbonyl)oxime. Examples of the benzoin-based photopolymerization initiator include benzoin. Examples of the benzyl-based photopolymerization initiator include benzil. Examples of the benzophenone-based photopolymerization initiator include benzophenone, benzoylbenzoic acid, 3,3'-dimethyl-4-methoxybenzophenone, polyvinylbenzophenone and $\alpha$-hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and dodecylthioxanthone.

The amount of the photopolymerization initiator used in the microparticle-containing polymerizable composition is 0.001 to 5 parts by weight, preferably 0.01 to 5 parts by weight, more preferably 0.05 to 3 parts by weight, based on 100 parts by weight of total monomer components of the vinyl monomer mixture or a partial polymerization product thereof contained in the microparticle-containing polymerizable composition.

Examples of the thermal polymerization initiator used in the microparticle-containing polymerizable composition include an azo-based thermal polymerization initiator such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobis-isovaleronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate and 2,2'-azobis(N,N'-dimethyleneisobutyramidine)dihydrochloride; a peroxide-based thermal polymerization initiator such as dibenzoyl peroxide and tert-butyl permaleate; and a redox-type thermal polymerization initiator. The amount of the thermal polymerization initiator is not particularly limited and may be sufficient if it is in the range where the compound is conventionally usable as a thermal polymerization initiator.

Examples of the microparticle contained in the microparticle-containing viscoelastic substrate include a metal particle or a metal oxide particle thereof, such as copper, nickel, aluminum, chromium, iron and stainless steel; a carbide particle such as silicon carbide, boron carbide and nitrogen carbide; a nitride particle such as aluminum nitride, silicon nitride and boron nitride; a ceramic particle typified by an oxide such as alumina and zirconia; an inorganic microparticle such as calcium carbide, aluminum hydroxide, glass and silica; a natural material particle such as volcanic Shirasu and sand; and a polymer particle such as polystyrene, polymethyl methacrylate, phenol resin, benzoguanamine resin, urea resin, silicone resin, nylon, polyester, polyurethane, polyethylene, polypropylene, polyamide and polyimide.

A hollow inorganic microsphere or a hollow organic microsphere may also be used as the microparticle contained in the microparticle-containing viscoelastic substrate. Specifically, examples of the hollow inorganic microsphere include a glassmade hollow balloon such as hollow glass balloon; a metal compound-made hollow balloon such as hollow alumina balloon; and a porcelain-made hollow balloon such as hollow ceramic balloon. Examples of the hollow organic microsphere include a resinmade hollow balloon such as hollow acryl balloon and hollow vinylidene chloride balloon.

Examples of the commercially available hollow glass balloon include "GLASS MICROBALLOON", trade name, produced by Fuji Silysia Chemical Ltd.; "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39" and "CEL-STAR PZ-6000", trade names, produced by Tokai Kogyo Co., Ltd.; and "SILUX - FINE BALLOON", trade name, produced by FINE-BALLOON Ltd.

Furthermore, a solid-core glass balloon may also be used as the microparticle contained in the microparticle-containing viscoelastic substrate. Examples of the solid-core glass balloon include "SUNSPHERE NP-100", trade name, produced by Asahi Glass Co., Ltd.; and "MICRO-GLASS BEAD EMB-20" and "MICRO-GLASS BEAD EGB-210", trade names, produced by Potters-Ballotini Co., Ltd.

Among these microparticles, in view of efficiency or weight of polymerization by an active energy ray (particularly, an ultraviolet ray), a hollow inorganic microparticle is preferred, and a hollow glass balloon is more preferred. When a hollow glass balloon is used, high-temperature adhesive strength can be enhanced without impairing other properties such as shear forth and holding force. Incidentally, one kind of a microparticle may be used alone, or two or more kinds thereof may be used in combination. Also, the surface of the microparticle may be subjected to various surface treatments (for example, a low surface tension treatment with a silicone-based compound, a fluorine-based compound or the like).

The particle diameter (average particle diameter) of the microparticle is not particularly limited but may be selected, for example, in the range from 1 to 500 $\mu$m, preferably from 5 to 200 $\mu$m, more preferably from 10 to 100 $\mu$m, still more preferably from 30 to 100 $\mu$m.

The specific gravity (real density) of the microparticle is not particularly limited but may be selected, for example, in the range from 0.01 to 1.8 g/cm$^3$ (preferably from 0.02 to 1.5 g/cm$^3$). If the specific gravity of the microparticle is less than 0.01 g/cm$^3$, the microparticle sometimes undergoes large float-up at the time of blending and mixing the microparticle in the microparticle-containing polymerizable composition, making it difficult to uniformly disperse the microparticles, or a problem in terms of strength is liable to occur and the microparticle is broken in some cases. On the other hand, if the specific gravity of the microparticle exceeds 1.8 g/cm$^3$, the transmittance of an active energy ray (particularly, an ultraviolet ray) decreases to sometimes cause reduction in the efficiency of the photocuring reaction or the weight of the thermally-foamable re-releasable acrylic pressure-sensitive adhesive tape becomes large, resulting in deterioration of workability. In particular, in the case of using a hollow inorganic microparticle as the microparticle, the real density thereof is preferably 0.1 to 0.6 g/cm$^3$, and in the case of using a hollow organic microparticle, the real density is preferably 0.01 to 0.05 g/cm$^3$.

The amount of the microparticle used is not particularly limited and may be selected, for example, in the range of allowing the microparticle to account for 5 to 50% by volume (vol%), preferably 15 to 40% by volume, based on the total volume of the microparticle-containing viscoelastic substrate formed from the microparticle-containing polymerizable composition. If the amount of the microparticle used is less than 5% by volume, the effect obtainable by the addition of the microparticle is sometimes lessened, whereas if the amount used exceeds 50% by volume, the pressure-sensitive adhesive strength of the microparticle-containing viscoelastic substrate formed from the microparticle-containing polymerizable composition may decrease.

The polyfunctional (meth)acrylate used in the microparticle-containing polymerizable composition is not particularly limited as long as it is a compound having at least two (meth)acryloyl groups.

Examples of the polyfunctional (meth)acrylate include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylate, polyester acrylate, urethane acrylate, and a reactive hyperbranched polymer having a plurality of (meth)acryloyl groups at the terminal [for example, "CN2300", "CN2301" and "CN2320" (trade names, produced by SARTOMER)]. Incidentally, a polyfunctional (meth)acrylate may be used alone or in combination thereof.

As for the amount of the polyfunctional (meth)acrylate used in the microparticle-containing polymerizable composition, the polyfunctional (meth)acrylate is preferably used such that the gel fraction of the microparticle-containing viscoelastic substrate formed from the microparticle-containing polymerizable composition becomes 45 to 99 wt%, preferably 50 to 95 wt%. If the gel fraction is less than 45 wt%, the cohesive force of the microparticle-containing viscoelastic substrate decreases and generation of foaming cannot be suppressed in some cases, whereas if the gel fraction exceeds 99 wt%, the flexibility of the microparticle-containing viscoelastic substrate decreases and this may adversely affect the pressure-sensitive adhesive performance or outer appearance.

The gel fraction of the microparticle-containing viscoelastic substrate is determined as follows. About 1 g of the microparticle-containing viscoelastic substrate is sampled and precisely weighed to determine the weight of the microparticle-containing viscoelastic substrate before dipping. Thereafter, the sample is dipped in about 40 g of ethyl acetate for 7 days and after the portion insoluble in ethyl acetate is entirely recovered and dried at 130°C for 2 hours, the dry weight of the insoluble portion is determined. The gel fraction is calculated by substituting the obtained numerical value into the following formula:

$$\text{Gel fraction (wt\%) of microparticle-containing viscoelastic substrate} = (\text{dry weight of insoluble portion}/\text{weight of microparticle-containing viscoelastic substrate before dipping}) \times 100$$

The polyfunctional (meth)acrylate for use in the microparticle-containing polymerizable composition is used, as described above, such that the gel fraction of the microparticle-containing viscoelastic substrate falls in the above-described range, and although, for example, the specific amount of the polyfunctional (meth)acrylate used varies depending on its molecular weight or the number of functional groups, the amount used is usually 0.001 to 5 parts by weight, preferably 0.001 to 3 parts by weight, more preferably 0.01 to 2 parts by weight, based on 100 parts by weight of total monomer components in the vinyl monomer mixture or a partial polymerization product thereof contained in the microparticle-containing polymerizable composition. If the amount used exceeds 5 parts by weight, the cohesive force of the thermally-foamable re-releasable acrylic pressure-sensitive adhesive tape may decrease to reduce the pressure-sensitive adhesive strength, whereas if the amount used is too small (for example, less than 0.001 parts by weight), the cohesive force of the thermally-foamable re-releasable acrylic pressure-sensitive adhesive tape may decrease.

In view of handling, the microparticle-containing polymerizable composition is preferably adjusted to a viscosity suitable for coating (usually, from 0.3 to 40 Pa·s s as a viscosity measured under the conditions of a measuring temperature of 25°C in the viscosity measurement by a B-type viscometer). For this purpose, in the microparticle-containing polymerizable composition, the vinyl monomer mixture may be preliminarily polymerized to form a partial polymerization product thereof. That is, the microparticle-containing polymerizable composition may contain a partial polymerization product of the vinyl monomer mixture.

In the partial polymerization product of the vinyl monomer mixture, although depending on the molecular weight of the portion where the partial polymerization is produced, the conversion is approximately 2 to 40 wt%, preferably on the order of 5 to 20 wt%. The partial polymerization is usually performed by irradiating an active energy ray (particularly, an ultraviolet ray) so as to avoid contact with oxygen.

The conversion of the partial polymerization product is calculated by precisely weighing about 0.5 g of the partial polymerization product, precisely weighing the weight after drying the partial product at 130°C for 2 hours, determining the weight decrement (evaporated amount (weight of unpolymerized monomer)], and substituting the obtained numerical value into the following formula:

$$\text{Conversion (\%) of partial polymerization product} = [1-(\text{weight loss})/(\text{weight of partial polymerization product before drying})] \times 100$$

The viscosity of the microparticle-containing polymerizable composition may be adjusted by appropriately blending a polymer for thickening. Examples of the polymer for thickening include an acrylic polymer obtained by copolymerizing the above-described alkyl (meth)acrylate with acrylic acid, acrylamide, acrylonitrile or acryloylmorpholine; styrene-butadiene rubber (SBR); isoprene rubber; a styrene-butadiene block copolymer (SBS); an ethylene-vinyl acetate copolymer; acrylic rubber; polyurethane; and polyester. Incidentally, a polymer for thickening may be used alone or in combination thereof.

As for the blending amount of the polymer for thickening, the polymer is used in a range of 40 wt% or less (for example, from 5 to 40 wt%) based on the microparticle-containing polymerizable composition.

The microparticle-containing viscoelastic substrate may contain cells. The mode in which cells are formed is not particularly limited and includes, for example, (1) a mode in which the microparticle-containing viscoelastic substrate is formed using a microparticle-containing pressure-sensitive adhesive composition where a gas component for forming cells (sometimes referred to as a "cell-forming gas") is mixed and cells are thereby formed (sometimes referred to as a "cell-mixed microparticle-containing polymerizable composition"), and (2) a mode in which the microparticle-containing viscoelastic substrate is formed using a microparticle-containing pressure-sensitive adhesive composition containing a foaming agent and cells are thereby formed. In the present invention, cells in the microparticle-containing viscoelastic substrate having mixed therein cells (sometimes referred to as a "cell-mixed microparticle-containing viscoelastic substrate") are preferably formed in the mode (1). Incidentally, the foaming agent is not particularly limited and may be appropriately selected, for example, from known foaming agents such as thermally-expandable microsphere.

The amount of cells which can be mixed in the cell-mixed microparticle-containing viscoelastic substrate is not particularly limited and may be appropriately selected according to the intended use or the like. For example, the amount of cells is 5 to 40 vol%, preferably 8 to 30 vol%, based on the volume of the cell-mixed microparticle-containing viscoelastic substrate. If the amount mixed is less than 5 vol%, the effects obtainable by mixing cells may not be obtained, whereas if the amount mixed exceeds 40 vol%, a cell penetrating the cell-mixed microparticle-containing viscoelastic substrate is formed in some cases and this may adversely affect the adhesion performance or outer appearance.

Fundamentally, the cell mixed in the cell-mixed microparticle-containing viscoelastic substrate is preferably a closed cell, but a closed cell and a semi-closed cell may be present together.

Such a cell usually has a spherical (particularly, perfectly spherical) shape but may have an irregular spherical shape. The average cell size (diameter) of the cell is not particularly limited and may be selected, for example, in the range from 1 to 1,000 μm (preferably from 10 to 500 μm, more preferably from 30 to 300 μm).

The cell component (gas component for forming cells; cell-forming gas) contained in the cell is not particularly limited, and an inert gas such as nitrogen, carbon dioxide or argon, or various gas components such as air may be used. In the case of performing a polymerization reaction or the like after mixing the cell-forming gas, it is important to use a cell-forming gas that does not inhibit the reaction. In view of not inhibiting the reaction and from the aspect of cost and the like, the cell-forming gas is suitably nitrogen.

In order to stably mix microcells, a surfactant may be added to the cell-mixed microparticle-containing polymerizable composition. The surfactant which can be used includes, for example, a hydrocarbon-containing surfactant, a silicone-containing surfactant and a fluorine-containing surfactant. Above all, a fluorine-containing surfactant is preferred, and a fluorine-containing surfactant containing a fluorine-based polymer having a weight average molecular weight of 20,000 or more is more preferred.

In the case where a fluorine-containing surfactant containing a fluorine-based polymer having a weight average molecular weight of 20,000 or more is used in the cell-mixed microparticle-containing polymerizable composition, a sufficiently large amount of cells can be stably mixed. This is considered to be ascribable to the fact that since the weight average molecular weight of the fluorine-based polymer constituting the fluorine-containing surfactant is as large as 20,000 or more, the film strength of the cell produced is strengthened and in turn, the amount of cells that can be mixed is increased or stability of the cell is raised to hardly allow the cell enlargement.

In the fluorine-containing surfactant containing a fluorine-based polymer having a weight average molecular weigh of 20,000 or more, the weight average molecular weight of the fluorine-based polymer is not particularly limited as long as it is 20,000 or more, but the molecular weight may be selected, for example, in the range from 20,000 to 100,000 (preferably from 22,000 to 80,000, more preferably from 24,000 to 60,000). If the weight average molecular weight of the fluorine-based polymer in the fluorine-containing surfactant is less than 20,000, the miscibility of cells or the stability of mixed cells decreases or the amount of cells that can be mixed decreases, and even if cells are mixed, the cell enlargement readily proceeds in the period from mixing of cells until formation of a cell-mixed microparticle-containing viscoelastic substrate formed from the cell-mixed microparticle-containing polymerizable composition, as a result, the amount of cells in the cell-mixed microparticle-containing viscoelastic substrate decreases or a cell (pore) penetrating the cell-mixed microparticle-containing viscoelastic substrate may be formed.

Only one kind of the fluorine-based polymer may be used, or two or more kinds thereof may be used in combination.

Such a fluorine-based polymer contains, as the monomer component, at least a monomer having a fluorine atom-containing group (sometimes referred to as a "fluorine-based monomer"). Only one kind of the fluorine-based monomer may be used, or two or more kinds thereof may be used in combination.

Examples of the fluorine-based monomer which can be suitably used include a vinyl-based monomer having a fluorine atom-containing group. In the vinyl-based monomer having a fluorine atom-containing group, the fluorine atom-containing group is suitably a perfluoro group, and the perfluoro group may be monovalent or may be divalent or greater polyvalent. Examples of the monovalent fluorine atom-containing group (particularly, perfluoro group) which can be suitably used include a perfluoroalkyl group (e.g., $CF_3CF_2$, $CF_3CF_2CF_2$). The perfluoroalkyl group may be bonded to the vinyl-based monomer through other groups (e.g., -O-, -OCO-, alkylene). Specifically, the monovalent fluorine atom-containing group may take a form such as perfluoroether group (e.g., perfluoroalkyl-oxy) or perfluoroester group (e.g., perfluoroalkyl-oxycarbonyl, perfluoroalkyl-carbonyloxy). Examples of the perfluoroether group include a $CF_3CF_2O$ group and a $CF_3CF_2CF_2O$ group. Examples of the perfluoroester group include a $CF_3CF_2OCO$ group, a $CF_3CF_2CF_2OCO$ group, a $CF_3CF_2COO$ group and a $CF_3CF_2CF_2COO$ group.

Also, as to the divalent or greater fluorine atom-containing group, for example, the divalent fluorine atom-containing group includes a perfluoroalkylene group corresponding to the above-described perfluoroalkyl group, such as tetrafluoroethylene group and hexafluoropropylene group. Similarly to the perfluoroalkyl group, the perfluoroalkylene group may be bonded to the main chain through other groups (e.g., - O-, -OCO-, alkylene) and may take a form of, for example, a perfluoroalkylene-oxy group such as tetrafluoroethylene-oxy group or hexafluoropropylene-oxy group; or a perfluoroalkylene-oxycarbonyl group such as tetrafluoroethylene-oxycarbonyl group or hexafluoropropylene-oxycarbonyl group.

In the fluorine atom-containing group such as perfluoro group (e.g., perfluoroalkyl, perfluoroalkylene), the carbon number of the perfluoro group moiety is not particularly limited and is, for example, 1 or is 2 or more (preferably from 3 to 30, more preferably from 4 to 20).

As for the vinyl-based monomer having a fluorine atom-containing group, a (meth)acrylic acid ester having a fluorine atom-containing group is suitable. The (meth)acrylic acid ester having a fluorine atom-containing group is suitably, for example, a perfluoroalkyl (meth)acrylate. Examples of the perfluoroalkyl (meth)acrylate include a perfluoro-$C_{1-20}$-alkyl (meth)acrylate such as perfluoromethyl (meth)acrylate, perfluoroethyl (meth)acrylate, perfluoropropyl (meth)acrylate, perfluoroisopropyl (meth)acrylate, perfluorobutyl (meth)acrylate, perfluoroisobutyl (meth)acrylate, perfluoro-s-butyl (meth)acrylate, perfluoro-tert-butyl (meth)acrylate, perfluoropentyl (meth)acrylate, perfluorohexyl (meth)acrylate, perfluoroheptyl (meth)acrylate and perfluorooctyl (meth)acrylate.

In the fluorine-based polymer, together with the fluorine-based monomer, a monomer component copolymerizable with the fluorine-based monomer may be used as the monomer component (sometimes referred to as a "non-fluorine-based monomer"). A non-fluorine-based monomer may be used alone or in combination thereof.

For example, in the case where the fluorine-based monomer is a vinyl-based monomer having a fluorine atom-containing group [particularly, a (meth)acrylic acid ester having a fluorine atom-containing group], a (meth)acrylic acid ester may be suitably used as the non-fluorine-based monomer and above all, an alkyl (meth)acrylate is preferred. Examples of the alkyl (meth)acrylate include $C_{1-20}$ alkyl (meth)acrylates [preferably $C_{4-18}$ alkyl (meth)acrylates] such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, tert-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate.

Examples of the (meth)acrylic acid ester other than the alkyl (meth)acrylate include a (meth)acrylic acid having an alicyclic hydrocarbon group, such as cyclopentyl (meth)acrylate, cyclohexyl (meth)acrylate and isobornyl (meth)acrylate; and a (meth)acrylic acid having an aromatic hydrocarbon group such as phenyl (meth)acrylate.

Examples of the non-fluorine-based monomer include a carboxyl group-containing monomer or an anhydride thereof, such as (meth)acrylic acid, itaconic acid, maleic acid, fumaric acid, crotonic acid and isocrotonic acid; a sulfonic acid group-containing monomer such as sodium vinylsulfonate; an aromatic vinyl compound such as styrene and vinyltoluene; a cyano group-containing monomer such as acrylonitrile and methacrylonitrile; olefins or dienes, such as ethylene, butadiene, isoprene and isobutylene; vinyl esters such as vinyl acetate; vinyl ethers such as vinyl alkyl ether; vinyl chloride; an amide group-containing monomer such as acrylamide, methacrylamide, N-vinylpyrrolidone, N,N-dimethyl(meth)acrylamide, N-methylol(meth)acrylamide, N-methoxymethyl(meth)acrylamide and N-butoxymethyl(meth)acrylamide; a hydroxyl group-containing monomer such as hydroxyalkyl (meth)acrylate (e.g., hydroxyethyl (meth)acrylate, hydroxypropyl (meth)acrylate and hydroxybutyl (meth)acrylate); an amino group-containing monomer such as aminoethyl (meth)acrylate, dimethylaminoethyl (meth)acrylate, tertbutylaminoethyl (meth)acrylate and (meth)acryloylmorpholine; an imide group-containing monomer such as cyclohexylmaleimide and isopropylmaleimide; a glycidyl group-containing monomer such as glycidyl (meth)acrylate and methylglycidyl (meth)acrylate; and an isocyanate group-containing monomer such as 2-methacryloyloxyethyl isocyanate. Furthermore, for example, a polyfunctional copolymerizable monomer (polyfunctional monomer) such as triethylene glycol di(meth)acrylate, diethylene glycol di(meth)acrylate, ethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate and divinylbenzene may also be used as the non-fluorine-based monomer.

In the present invention, the fluorine-containing surfactant is suitably a fluorine-containing surfactant containing a fluorine-based polymer with the monomer component being at least a vinyl-based monomer having a fluorine atom-containing group [particularly, a (meth)acrylic acid ester having a fluorine atom-containing group]. Above all, a fluorine-containing surfactant containing a fluorine-based polymer with the monomer component being at least a vinyl-based monomer having a fluorine atom-containing group [particularly, a (meth)acrylic acid ester having a fluorine atom-containing group] and a (meth)acrylic acid ester [particularly, an alkyl (meth)acrylate] may be suitably used. In the fluorine-based polymer constituting such a fluorine-containing surfactant, the proportion of the vinyl-based monomer having a fluorine atom-containing group [particularly, a (meth)acrylic acid ester having a fluorine atom-containing group] is not particularly limited and may be appropriately selected according to the properties of the objective surfactant.

Specific examples of the fluorine-containing surfactant which can be used include "F TOP EF-352" (trade name, produced by JEMCO Inc.), "F TOP EF-801" (trade name, produced by JEMCO Inc.) and "UNI DYNE TG-656" (trade name, produced by Daikin Industries, Ltd.).

The amount used (solid content) of the fluorine-containing surfactant is not particularly limited but, for example, may be selected in the range from 0.01 to 2 parts by weight (preferably from 0.03 to 1.5 parts by weight, more preferably from 0.05 to 1 part by weight) based on 100 parts by weight of total monomer components in the cell-mixed microparticle-containing polymerizable composition. If the amount used is less than 0.01 parts by weight based on 100 parts by weight of total monomer components in the cell-mixed microparticle-containing polymerizable composition, the miscibility of cells decreases and a sufficiently large amount of cells can be hardly mixed in the microparticle-containing polymerizable composition, whereas if it exceeds 2 parts by weight, the adhesion performance decreases.

For allowing cells to be stably mixed and present in the cell-mixed microparticle-containing polymerizable composition used to form the cell-mixed microparticle-containing viscoelastic substrate, the cell is preferably blended and mixed as a final component blended in the cell-mixed microparticle-containing polymerizable composition. In particular, it is preferred to raise the viscosity of the cell-mixed microparticle-containing polymerizable composition before mixing the cell (sometimes referred to as a "cell-mixed microparticle-containing viscoelastic precursor"). The viscosity of the cell-mixed microparticle-containing viscoelastic precursor is not particularly limited as long as it is a viscosity at which the cell mixed can be stably held, but in terms of a viscosity measured under the conditions of viscometer: BH viscometer, rotor: No. 5 rotor, rotation number: 10 rpm, and measuring temperature: 30°C, the viscosity is preferably from 5 to 50 Pa·s (more preferably from 10 to 40 Pa·s). If the viscosity (BH viscometer, No. 5 rotor, 10 rpm, 30°C) of the cell-mixed microparticle-containing viscoelastic precursor is less than 5 Pa·s, the viscosity is too low and cells mixed are sometimes immediately integrated and escape to the outside of the system, whereas if it exceeds 50 Pa·s, formation of the microparticle-containing viscoelastic substrate containing cells becomes difficult due to excessively high viscosity.

The viscosity of the cell-mixed microparticle-containing viscoelastic precursor can be adjusted, for example, by a method of blending various polymer components such as acrylic rubber and thickening additive, or a method of partially polymerizing a vinyl monomer mixture. Specifically, a vinyl-based monomer and a polymerization initiator (for example, a photopolymerization initiator) are mixed to prepare a monomer mixture, the monomer mixture is subjected to a polymerization reaction according to the kind of the polymerization initiator to prepare a composition (syrup) in which only a part of the monomer component is polymerized, and a fluorine-containing surfactant containing a fluorine-based polymer having a weight average molecular weight of 20,000 or more and, if desired, a microparticle or various additives are blended to the syrup, whereby a cell-mixed microparticle-containing viscoelastic precursor having an appropriate viscosity enabling stably containing cells can be prepared. Incidentally, at the preparation of the syrup, a fluorine-containing surfactant containing a fluorine-based polymer having a weight average molecular weight of 20,000 or more and, if desired, a microparticle, various additives or the like may be appropriately blended in advance in the vinyl monomer mixture.

The method of mixing cells is not particularly limited and a known cell mixing method may be utilized. Examples of the apparatus include an apparatus including a stator with a large number of fine teeth on a disc having a through-hole in the center part and a rotor opposing the starter with teeth and, similarly to the stator, having fine teeth on a disc. The cell-mixed microparticle-containing viscoelastic precursor is introduced between the teeth on the stator and the teeth on the rotor in the apparatus above, and a gas component for forming cells (cell-forming gas) is introduced into the cell-mixed microparticle-containing viscoelastic precursor through the through-hole while rotating the rotor at a high speed, whereby a cell-mixed microparticle-containing polymerizable composition in which a cell-forming gas is microdispersed and mixed in the cell-mixed microparticle-containing viscoelastic precursor, can be obtained.

In order to suppress or prevent the cell enlargement, the steps from mixing of cells to formation of a cell-mixed microparticle-containing viscoelastic substrate are preferably performed as a series of continuous steps. More specifically, it is preferred to prepare a cell-mixed microparticle-containing polymerizable composition by mixing cells as described above and then form a cell-mixed microparticle-containing viscoelastic substrate from the cell-mixed microparticle-containing polymerizable composition by using, for example, a substrate forming method described below.

Such a cell-mixed microparticle-containing polymerizable composition scarcely causes the cell enlargement and contains a sufficiently large amount of cells and therefore, can be suitably utilized as a composition for forming a substrate having mixed therein cells (sometimes referred to as a "cell-mixed substrate") in a pressure-sensitive adhesive tape or sheet by appropriately selecting the components (for example, the above-described vinyl monomer mixture or a partial polymerization product thereof, a photopolymerization initiator, a microparticle, a polyfunctional (meth)acrylate and an additive) constituting the cell-mixed microparticle-containing polymerization composition.

Other than the components above, the microparticle-containing pressure-sensitive adhesive composition for forming the microparticle-containing viscoelastic substrate may contain an appropriate additive according to usage. Examples of the additive include a crosslinking agent (e.g., polyisocyanate-based crosslinking agent, silicone-based crosslinking agent, epoxy-based crosslinking agent, alkyletherified melamine-based crosslinking agent), a tackifier (e.g., tackifier that is solid, semisolid or liquid at ordinary temperature and composed of a rosin derivative resin, a polyterpene resin, a petroleum resin, an oil-soluble phenol resin or the like), a plasticizer, a filler, an aging inhibitor, an antioxidant, a colorant (e.g., pigment, dye) and a softener.

The microparticle-containing viscoelastic substrate is not particularly limited in its production method but may be formed, for example, by coating a microparticle-containing polymerizable composition on an appropriate support such as release liner or backing to form a microparticle-containing polymerizable composition layer and, if desired, drying or curing (curing by the effect of heat or an active energy ray) the layer. At the time of performing curing by the effect of an active energy ray (photocuring), since the photopolymerization reaction is inhibited by oxygen in air, oxygen is preferably blocked by laminating an appropriate support such as release liner or backing on the layer or performing the photocuring in a nitrogen atmosphere. Here, the support appropriately used at the production of a microparticle-containing viscoelastic substrate may be timely peeled off when producing the thermally-foamable re-releasable acrylic pressure-sensitive adhesive tape of the present invention or may be peeled off at the time of using the thermally-foamable re-releasable acrylic pressure-sensitive adhesive tape after production.

The thickness of the microparticle-containing viscoelastic substrate is not particularly limited but for ensuring good adhesive strength, the thickness is usually 100 μm or more (for example, from 100 to 1,500 μm), preferably 200 μm or more (for example, from 200 to 1,400 μm), more preferably 300 μm or more (for example, from 300 to 1,300 μm).

The microparticle-containing viscoelastic substrate may take a single-layer form or a multilayer form.

Thermal Foaming Agent-Containing Pressure-sensitive adhesive Layer

The thermal foaming agent-containing pressure-sensitive adhesive layer is not particularly limited as long as it is a layer composed of an acrylic pressure-sensitive adhesive agent containing a thermal foaming agent, and the pressure-sensitive adhesive layer usually contains an acrylic polymer as the base polymer. Here, in the thermally-foamable re-releasable acrylic pressure-sensitive adhesive tape of the present invention, the base polymer in the thermal foaming agent-containing pressure-sensitive adhesive composition may be the same with or different from the base polymer in the microparticle-containing polymerizable composition for forming the microparticle-containing viscoelastic substrate.

That is, the thermal foaming agent-containing pressure-sensitive adhesive composition for forming the thermal foaming agent-containing pressure-sensitive adhesive layer is preferably a thermal foaming agent-containing pressure-sensitive adhesive composition where the base polymer is an acrylic polymer with the main monomer component being an acrylic monomer. In particular, a thermal foaming agent-containing pressure-sensitive adhesive composition composed of a vinyl monomer mixture or a partial polymerization product thereof, a photopolymerization initiator, a thermal foaming agent and a polyfunctional (meth)acrylate is preferred.

The vinyl-based monomer for use in the thermal foaming agent-containing pressure-sensitive adhesive composition is not particularly limited as long as it is a monomer having an unsaturated double bond and being capable of radical polymerization (radical polymerizable monomer), but in view of reactivity, an acrylic monomer is preferred and among acrylic monomers, an alkyl (meth)acrylate containing an alkyl group having a carbon number of 2 to 18 is preferred. That is, the main component of the vinyl monomer mixture or a partial polymerization product thereof used in the thermal foaming agent-containing pressure-sensitive adhesive composition is preferably an acrylic monomer, more preferably an alkyl (meth)acrylate containing an alkyl group having a carbon number of 2 to 18.

Examples of the alkyl (meth)acrylate containing an alkyl group having a carbon number of 2 to 18 include ethyl (meth)acrylate, n-propyl (meth)acrylate, isopropyl (meth)acrylate, n-butyl (meth)acrylate, sec-butyl (meth)acrylate, tert-butyl (meth)acrylate, n-octyl (meth)acrylate, isooctyl (meth)acrylate, 2-ethylhexyl (meth)acrylate, isononyl (meth)acrylate, dodecyl (meth)acrylate and isostearyl (meth)acrylate. One kind or two or more kinds of these alkyl (meth)acrylates are used.

In the thermal foaming agent-containing pressure-sensitive adhesive composition, a copolymerizable monomer may be used together with the vinyl-based monomer (particularly, an acrylic monomer). That is, the vinyl monomer mixture or a partial polymerization product thereof contained in the thermal foaming agent-containing pressure-sensitive adhesive composition may contain a copolymerizable monomer.

Examples of the copolymerizable monomer used in the thermal foaming agent-containing pressure-sensitive adhesive composition for forming a thermal foaming agent-containing pressure-sensitive adhesive composition layer include a carboxyl group-containing monomer such as acrylic acid, methacrylic acid, carboxyethyl acrylate, carboxypentyl acrylate, itaconic acid, maleic acid and crotonic acid; a hydroxyl group-containing monomer such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)-methylacrylate; an acid anhydride monomer such as maleic anhydride and itaconic anhydride; a sulfonic acid group-containing monomer such as 2-acrylamido-2-methylpropanesulfonic acid and sulfopropyl acrylate; a phosphoric acid group-containing monomer such as 2-hydroxyethylacryloyl phosphate; an amide-based monomer such as (meth)acrylamide and N-substituted (meth)acrylamide (e.g., N-methylolacrylamide); a succinimide-based monomer such as N-(meth)acryloyloxymethylene succinimide, N-(meth)acryloyl-6-oxyhexamethylene succinimide and N-(meth)acryloyl-8-oxyoctamethylene succinimide; a vinyl-based monomer such as vinyl acetate, N-vinylpyrrolidone, N-vinylcarboxylic acid amides, styrene and N-vinylcaprolactam; a cyanoacrylate-based such as acrylonitrile and methacrylonitrile; an acrylic acid ester-based monomer such as glycidyl (meth)acrylate, tetrahydrofurfuryl (meth)acrylate, polyethylene glycol (meth)acrylate, polypropylene glycol (meth)acrylate, fluorine (meth)acrylate, silicone (meth)acrylate and 2-methoxyethyl acrylate; an alkyl (meth)acrylate having an alkyl group different from that in the above-described alkyl (meth)acrylate as the main component, such as methyl (meth)acrylate and octadecyl (meth)acrylate; and an alicyclic acrylate such as isobornyl (meth)acrylate. One kind or two or more kinds of these copolymerizable monomers may be used.

In the case of using a copolymerizable monomer in the vinyl monomer mixture or a partial polymerization product thereof constituting the thermal foaming agent-containing pressure-sensitive adhesive composition, the ratio is preferably 60 to 99.9 wt% of a vinyl-based monomer and 0.1 to 40 wt% of a copolymerizable monomer, more preferably 70 to 99.5 wt% of a vinyl-based monomer and 0.5 to 30 wt% of a copolymerizable monomer, still more preferably 80 to 99 wt% of a vinyl-based monomer and 1 to 20 wt% of a copolymerizable monomer.

The copolymerizable monomer is preferably a hydroxyl group-containing monomer or a carboxyl group-containing monomer, and in particular, an acrylic acid is preferably used. The amount of the copolymerizable monomer used is preferably 1 to 10 wt%. By using the copolymerizable monomer in this range, the adhesive strength can be enhanced.

In the thermal foaming agent-containing pressure-sensitive adhesive composition, various polymerization initiators (for example, a thermal polymerization initiator or a photopolymerization initiator) can be used as the polymerization initiator without limitation. In particular, a photopolymerization initiator may be suitably used, because the polymerization time can be shortened.

At the production of a thermal foaming agent-containing pressure-sensitive adhesive layer, when a thermal foaming agent-containing pressure-sensitive adhesive composition containing a polymerization initiator such as thermal polymerization initiator or photopolymerization initiator is used, a curing reaction by heat or an active energy ray can be utilized and therefore, the thermal foaming agent-containing pressure-sensitive adhesive layer can be formed by curing the thermal foaming agent-containing pressure-sensitive adhesive composition in a state of a thermal foaming agent being mixed therein. That is, a thermal foaming agent-containing pressure-sensitive adhesive layer having a structure where a thermal foaming agent is stably contained can be easily obtained. In the present invention, since a photopolymerization initiator is preferably used as the polymerization initiator, the thermal foaming agent-containing pressure-sensitive adhesive layer having a stable thermal foaming agent-containing structure is preferably produced by a polymerization reaction (photocuring reaction) using an active energy ray. Incidentally, a polymerization initiator may be used alone or in combination thereof.

The photopolymerization initiator used in the thermal foaming agent-containing pressure-sensitive adhesive composition for forming the thermal foaming agent-containing pressure-sensitive adhesive composition layer is not particularly limited and examples of the photopolymerization initiator which can be used include a benzoin ether-based photopolymerization initiator, an acetophenone-based photopolymerization initiator, an $\alpha$-ketol-based photopolymerization initiator, an aromatic sulfonyl chloride-based photopolymerization initiator, an optically active oxime-based photopolymerization initiator, a benzoin-based photopolymerization initiator, a benzyl-based photopolymerization initiator, a benzophenone-based photopolymerization initiator, a ketal-based photopolymerization initiator and a thioxanthone-based photopolymerization initiator.

Specifically, examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone and 4-tert-butyldichloroacetophenone. Examples of the $\alpha$-ketol-based photopolymerization initiator include 2-methyl-2-hydroxypropiophenone and 1-[4-(2-hydroxyethyl)-phenyl]-2-hydroxy-2-methylpropan-1-one. Examples of the aromatic sulfonyl chloride-based photopolymerization initiator include 2-naphthalenesulfonyl chloride. Examples of the optically active oxime-based photopolymerization initiator include 1-phenyl-1,1-propanedione-2-(o-ethoxycarbonyl)oxime. Examples of the benzoin-based photopolymerization initiator include benzoin. Examples of the benzyl-based photopolymerization initiator include benzil. Examples of the benzophenone-based photopolymerization initiator include benzophenone, benzoylbenzoic acid, 3,3'-dimethyl-4-methoxybenzophenone, polyvinylbenzophenone and $\alpha$-hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and dodecylthioxanthone.

Examples of the thermal polymerization initiator used in the thermal foaming agent-containing pressure-sensitive adhesive composition include an azo-based thermal polymerization initiator such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobis-isovaleronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate and 2,2'-azobis(N,N'-dimethyleneisobutyramidine)dihydrochloride; a peroxide-based thermal polymerization initiator such as dibenzoyl peroxide and tert-butyl permaleate; and a redox-type thermal polymerization initiator. The amount of the thermal polymerization initiator used is not particularly limited and may be sufficient if it is in the range where the compound is conventionally usable as a thermal polymerization initiator.

The photopolymerization initiator is used in the thermal foaming agent-containing pressure-sensitive adhesive composition in an amount of 0.001 to 5 parts by weight, preferably 0.01 to 5 parts by weight, more preferably 0.05 to 3 parts by weight, based on 100 parts by weight of total monomer components in the vinyl monomer mixture or a partial polymerization product thereof contained in the thermal foaming agent-containing pressure-sensitive adhesive composition.

At the activation of the photopolymerization initiator, an active energy ray is irradiated on the thermal foaming agent-containing pressure-sensitive adhesive composition. Examples of the active energy ray include ionizing radiation such as $\alpha$-ray, $\beta$-ray, $\gamma$-ray, neutron ray and electron beam, and an ultraviolet ray. Above all, an ultraviolet ray is suitable. The irradiation energy of the active energy ray or the irradiation time thereof is not particularly limited and may be sufficient if the photopolymerization initiator can be activated to bring about a reaction of the monomer components.

The thermal foaming agent used in the thermal foaming agent-containing pressure-sensitive adhesive composition is not particularly limited and, for example, a known thermal foaming agent may be appropriately selected and used. Above all, a microencapsulated foaming agent may be suitably used. Examples of the microencapsulated foaming agent include a microsphere obtained by encapsulating a substance easy to gasify and expand under heating, such as isobutane, propane or pentane, in a shell having elasticity (sometimes referred to as a "thermally-expandable microsphere").

In many cases, the shell of the thermally-expandable microsphere is usually formed of, for example, a thermoplastic substance, a hot-melt substance or a substance that is ruptured due to thermal expansion. Examples of the substance for forming the shell of the thermally-expandable microsphere include a vinylidene chloride-acrylonitrile copolymer, polyvinyl alcohol, polyvinyl butyral, polymethyl methacrylate, polyacrylonitrile, polyvinylidene chloride and polysulfone. The thermally-expandable microsphere can be produced by a conventional method such as coacervation or interfacial polymerization.

As for the thermally-expandable microsphere, a commercial product may also be utilized. The commercial product of the foaming agent is not particularly limited, and examples thereof include "Matsumoto Microsphere F-30", "Matsumoto Microsphere F-50", "Matsumoto Microsphere F-80S" and "Matsumoto Microsphere F-85" (trade names, produced by Matsumoto Yushi-Seiyaku Co., Ltd.); and "EXPANCEL Du" (trade name, produced by Akzo Nobel Surface Chemistry AB).

In view of dispersibility or thin layer formability, the average particle diameter of the thermally-expandable microsphere is generally on the order of 1 to 80 $\mu$m, preferably on the order of 3 to 50 $\mu$m.

The thermally-expandable microsphere preferably has an appropriate strength high enough to cause no rapture until the volume expansion ratio becomes 5 times or more, particularly 10 times or more, so as to efficiently reduce the pressure-sensitive adhesive strength of the pressure-sensitive adhesive agent-containing pressure-sensitive adhesive layer by a heat temperature. If a thermally-expandable microsphere that is ruptured at a low expansion ratio is used or a thermal expanding agent that is not microencapsulated is used, the pressure-sensitive adhesive area between the thermal foaming agent-containing pressure-sensitive adhesive layer and the adherend is not sufficiently reduced and good releasability is difficult to obtain.

The amount of the thermal foaming agent used varies depending on the kind, but the thermal foaming agent is used in an amount of 5 to 60 parts by weight, preferably 10 to 50 parts by weight, based on 100 parts by weight of total monomer components in the vinyl monomer mixture or a partial polymerization product thereof contained in the thermal foaming agent-containing pressure-sensitive adhesive composition. If the amount used is less than 5 parts by weight, the effective reduction in the pressure-sensitive adhesive strength after heat treatment is liable to become insufficient, whereas if it exceeds 60 parts by weight, cohesion failure of the thermal foaming agent-containing pressure-sensitive adhesive layer or interfacial failure with the microparticle-containing viscoelastic substrate readily occurs.

Other thermal foaming agents for use in the thermal foaming agent-containing pressure-sensitive adhesive composition include, for example, various inorganic foaming agents and organic foaming agents. Representative examples of the inorganic foaming agent include ammonium carbonate, ammonium hydrogencarbonate, sodium hydrogencarbonate, ammonium nitrite, sodium borohydride and azides. Representative examples of the organic foaming agent include water; an alkane chlorofluoride such as trichloromonofluoromethane and dichloromonofluoromethane; an azo-based compound such as azobisisobutyronitrile, azodicarbonamide and barium azodicarboxylate; a hydrazine-based compound such as paratoluenesulfonyl hydrazide, diphenylsulfone-3,3'-disulfonyl hydrazide, 4,4'-oxybis(benzenesulfonylhydrazide) and allylbis(sulfonylhydrazide); a semicarbazide-based compound such as p-toluilene sulfonylsemicarbazide and 4,4'-oxybis(benzenesulfonylsemicarbazide); a triazole-based compound such as 5-morpholyl-1,2,3,4-thiatriazole; and an N-nitroso-based compound such as N,N'-dinitrosopentamethylenetetramine and N,N'-dimethyl-N, N'-dinitrosoterephthalamide. A thermal foaming agent may be used alone or in combination thereof. Furthermore, the thermal foaming agent-containing pressure-sensitive adhesive composition may contain a foaming aid, if desired.

As for the polyfunctional (meth)acrylate used in the thermal foaming agent-containing pressure-sensitive adhesive composition, a compound having at least two (meth)acryloyl groups may be used without any particular limitation.

Examples of the polyfunctional (meth)acrylate include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylate, polyester acrylate, urethane acrylate, and a reactive hyperbranched polymer having a plurality of (meth)acryloyl groups at the terminal [for example, "CN2300", "CN2301" and "CN2320" (trade names, produced by SARTOMER)]. Incidentally, a polyfunctional (meth)acrylate may be used alone or in combination thereof.

As for the amount of the polyfunctional (meth)acrylate used, the polyfunctional (meth)acrylate is preferably blended such that the gel fraction of the thermal foaming agent-containing pressure-sensitive adhesive layer formed from the thermal foaming agent-containing pressure-sensitive adhesive composition becomes from 50 to 99 wt%, preferably from 70 to 95 wt%. If the gel fraction is less than 50 wt%, foam-peeling sometimes becomes difficult, whereas if it exceeds 99 wt%, bad wettability and difficult adhesion may result.

The gel fraction of the thermal foaming agent-containing pressure-sensitive adhesive layer is determined as follows. About 1 g of the thermal foaming agent-containing pressure-sensitive adhesive layer is sampled and precisely weighed to determine the weight of the thermal foaming agent-containing pressure-sensitive adhesive layer before dipping. Thereafter, the sample is dipped in about 40 g of ethyl acetate for 7 days and after the portion insoluble in ethyl acetate is entirely recovered and dried at 130°C for 2 hours, the dry weight of the insoluble portion is determined. The gel fraction is calculated by substituting the obtained numerical value into the following formula:

$$\text{Gel fraction (wt\%) of thermal foaming agent-containing pressure-sensitive adhesive layer} = (\text{dry weight of insoluble portion/weight of thermal foaming agent-containing pressure-sensitive adhesive layer before dipping}) \times 100$$

The polyfunctional (meth)acrylate is specifically used, as described above, in an amount such that the gel fraction of the thermal foaming agent-containing pressure-sensitive adhesive layer falls in the above-described range, and although, for example, the specific amount used varies depending on its molecular weight or the number of functional groups, the polyfunctional (meth)acrylate is usually used in an amount of 0.001 to 5 parts by weight, preferably 0.001 to 3 parts by weight, more preferably 0.01 to 2 parts by weight, based on 100 part by weight of total monomer components in the vinyl monomer mixture or a partial polymerization product thereof contained in the thermal foaming agent-containing pressure-sensitive adhesive composition. If the amount exceeds 5 wt%, for example, the cohesive force of the thermal foaming agent-containing pressure-sensitive adhesive layer becomes excessively high and the pressure-sensitive adhesive strength may decrease, whereas if the amount used is too small (for example, less than 0.001 wt%), the cohesive force of the thermal foaming agent-containing pressure-sensitive adhesive composition layer may decrease.

In the thermal foaming agent-containing pressure-sensitive adhesive composition, various additives may be blended. Examples of the additive include a crosslinking agent such as isocyanate-based crosslinking agent and epoxy-based crosslinking agent; a tackifier such as rosin derivative resin, polyterpene resin, petroleum resin and oil-soluble phenol resin; a plasticizer; a filler; an anti-aging agent; and a surfactant.

The method for forming the thermal foaming agent-containing pressure-sensitive adhesive layer is not particularly limited but may be formed, for example, by coating a thermal foaming agent-containing pressure-sensitive adhesive composition on an appropriate support such as release liner or backing to form a thermal foaming agent-containing pressure-sensitive adhesive composition layer and, if desired, drying or curing (curing by the effect of heat or an active energy ray) the layer. At the time of performing curing by the effect of an active energy ray (photocuring), since the photopolymerization reaction is inhibited by oxygen in air, oxygen is preferably blocked by laminating an appropriate support such as release liner or backing on the layer or performing the photocuring in a nitrogen atmosphere. The support appropriately used at the formation of a thermal foaming agent-containing pressure-sensitive adhesive layer may be timely peeled off when producing the thermally-foamable re-releasable acrylic pressure-sensitive adhesive tape of the present invention or may be peeled off at the time of using the thermally-foamable re-releasable acrylic pressure-sensitive adhesive tape after production.

The thickness of the thermal foaming agent-containing pressure-sensitive adhesive layer is appropriately selected according to the intended use of the thermally-foamable re-releasable pressure-sensitive adhesive tape of the present invention, reduction in the pressure-sensitive adhesive strength by heating, or the like, but for keeping the surface smooth, the thickness is preferably not more than the maximum particle diameter of the thermal foaming agent (particularly, a thermally-expandable microsphere) and is, for example, from 1 to 300 $\mu$m, preferably from 10 to 250 $\mu$m, more preferably on the order of 30 to 200 $\mu$m. If the thickness of the thermal foaming agent-containing pressure-sensitive adhesive layer is too small, a pressure-sensitive adhesive strength high enough to hold an adherend is not obtained in some cases. The thermal foaming agent-containing pressure-sensitive adhesive layer may take a single-layer form or a multilayer form.

Release Liner

The release liner is used at the production of the thermally-foamable re-releasable acrylic pressure-sensitive adhesive tape or used as a protective material for the pressure-sensitive adhesive surface or the like until the tape is used after production. Incidentally, the release liner may not be necessarily used at the production of the thermally-foamable re-releasable acrylic pressure-sensitive adhesive tape but in the case of a photopolymerization reaction, the reaction is inhibited by oxygen or the like in air and therefore, the release liner is preferably used for covering the surface and preventing contact with oxygen. The release liner is usually peeled off at the time of using the thermally-foamable re-releasable acrylic pressure-sensitive adhesive tape.

The release liner is not particularly limited as long as it blocks oxygen and has light transparency, but examples thereof include a substrate with at least one surface being release-treated (parting treated) by a release agent, a low adhesive substrate composed of a fluorine-based polymer (e.g., polytetrafluoroethylene, polychlorotrifluoroethylene, polyvinyl fluoride, polyvinylidene fluoride, tetrafluoroethylene/hexafluoropropylene copolymer, chlorotrifluoroethylene/ vinylidene fluoride copolymer), and a low adhesive substrate composed of a nonpolar polymer (for example, an olefin-based resin such as polyethylene and polypropylene). In the case of a low adhesive substrate, both surfaces can be utilized as a release surface, and in the case of a release-treated substrate, the release-treated surface can be utilized as a release surface.

In the substrate with at least one surface being release-treated (parting treated), which is used as the release liner, examples of the substrate include a polyester film such as polyethylene terephthalate film; an olefin-based resin film such as polyethylene film and polypropylene film; a polyvinyl chloride film; a polyimide film; a polyamide film such as nylon film; and a plastic substrate film such as rayon film. Furthermore, a paper-made substrate (that is, a substrate composed of paper such as woodfree paper, Japanese paper, kraft paper, glassine paper, synthetic paper, top-coated paper or the like) may also be used. Above all, a polyester film such as polyethylene terephthalate film is suitably used.

The release agent is not particularly limited and, for example, a silicone-based release agent, a fluorine-based release agent or a long-chain alkyl-based release agent may be used. A release agent may be used alone or in combination thereof. The release liner is produced, for example, by a commonly employed known method.

The thickness of the release liner is not particularly limited as long as the film blocks oxygen and has light transparency. Also, the release liner may take a sing-layer form or a multilayer form.

Production Method of Thermally-foamable Re-Releasable Acrylic Pressure-sensitive adhesive Tape

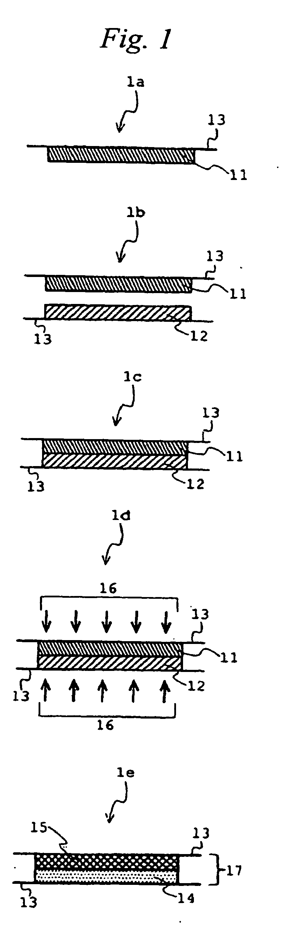

The production method of the thermally-foamable re-releasable acrylic pressure-sensitive adhesive tape of the present invention is described in detail below, according to the necessity, by referring to the drawings. The thermally-foamable re-releasable acrylic pressure-sensitive adhesive tape of the present invention includes at least a microparticle-containing viscoelastic substrate and a thermal foaming agent-containing pressure-sensitive adhesive layer. Figs. 1, 2 and 3 show examples of the production process of the thermally-foamable re-releasable acrylic pressure-sensitive adhesive tape (Production Process Examples 1 to 3, respectively), but the production method of the thermally-foamable re-releasable acrylic pressure-sensitive adhesive tape is not limited to these examples of the production process.

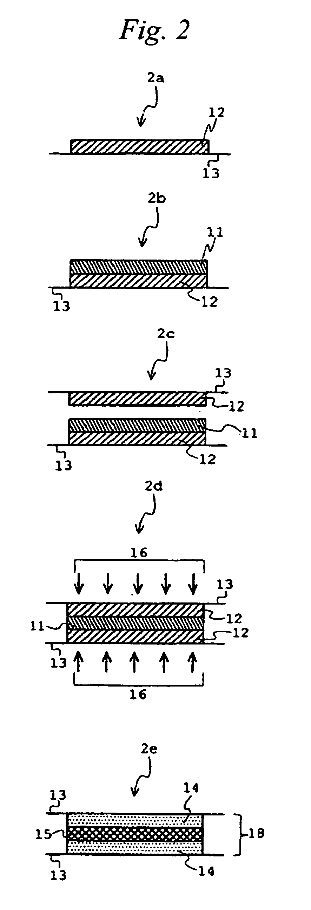

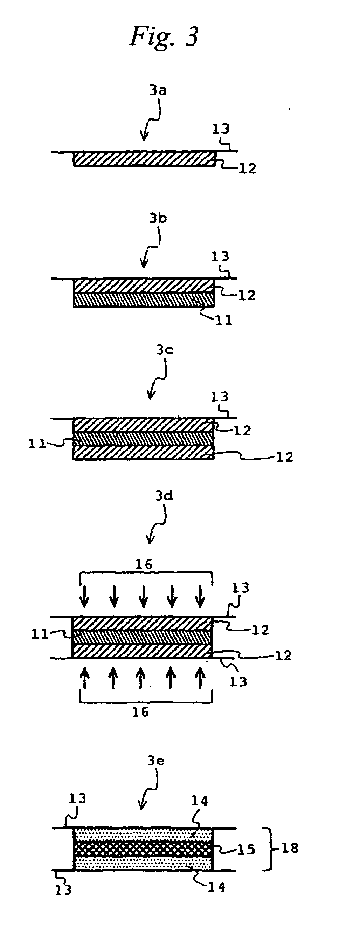

Fig. 1 is a schematic cross-sectional view showing one example of the process for producing the thermally-foamable re-releasable acrylic pressure-sensitive adhesive tape of the present invention, and Figs. 2 and 3 each is a schematic cross-sectional view showing another example of the process for producing the thermally-foamable re-releasable acrylic pressure-sensitive adhesive tape of the present invention. In Figs. 1 to 3, 11 denotes a microparticle-containing polymerizable composition layer, 12 denotes a thermal foaming agent-containing pressure-sensitive adhesive composition layer, 13 denotes a release liner, 14 denotes a thermal foaming agent-containing pressure-sensitive adhesive layer, 15 denotes a microparticle-containing viscoelastic substrate, 16 denotes an active energy ray, 17 denotes a thermally-foamable re-releasable acrylic pressure-sensitive adhesive tape (single-sided type), and 18 denotes a thermally-foamable re-releasable acrylic pressure-sensitive adhesive tape (double-sided type).

Production Process Example 1 of Thermally-foamable Re-Releasable Acrylic Pressure-sensitive adhesive Tape

The first step of Production Process Example 1 is a step of coating a microparticle-containing polymerizable composition on a release-treated surface of a release liner 13 to form a microparticle-containing polymerizable composition layer 11. In this step, a sheet where a microparticle-containing polymerizable composition layer 11 is formed on the release-treated surface of a release liner 13 is produced. 1a shows the first step in Production Process Example 1.

The second step of Production Process Example 1 is a step of coating a thermal foaming agent-containing pressure-sensitive adhesive composition on a release-treated surface of a release liner 13 to form a thermal foaming agent-containing pressure-sensitive adhesive composition layer 12. In this step, a sheet where a thermal foaming agent-containing pressure-sensitive adhesive composition layer 12 is formed on a release-treated surface of a release liner 13 is produced. 1b shows the second step in Production Process Example 1.

The third step of Production Process Example 1 is a step of laminating the sheet produced in the first step with the sheet produced in the second step in the form of the microparticle-containing polymerizable composition layer 11 coming into contact with the thermal foaming agent-containing pressure-sensitive adhesive composition layer 12. In this step, a laminate having a release liner 13 on one surface of a microparticle-containing polymerizable composition layer 11 through a thermal foaming agent-containing pressure-sensitive adhesive layer 12 and further having a release liner 13 on another surface of the microparticle-containing polymerizable composition layer 11 is produced. 1c shows the third step in Production Process Example 1.

The fourth step of Production Process Example 1 is a step of irradiating an active energy ray 16 on both surfaces of the laminate produced in the third step through a release liner 13. In this step, the microparticle-containing polymerizable composition layer 11 and the thermal foaming agent-containing pressure-sensitive adhesive composition layer 12 are photocured and become a microparticle-containing viscoelastic substrate 15 and a thermal foaming agent-containing pressure-sensitive adhesive layer 14, respectively. Incidentally, in the laminate, the microparticle-containing polymerizable composition layer 11 and the thermal foaming agent-containing pressure-sensitive adhesive composition layer 12 each is blocked from oxygen by the release liner 13. 1d shows the fourth step in Production Process Example 1.

1e shows a thermally-foamable re-releasable acrylic pressure-sensitive adhesive tape produced by Production Process Example 1. The thermally-foamable re-releasable acrylic pressure-sensitive adhesive tape 17 is a single-sided pressure-sensitive adhesive sheet with backing, having a thermal foaming agent-containing pressure-sensitive adhesive layer 14 on one surface of a microparticle-containing viscoelastic substrate 15, and furthermore, in the thermally-foamable re-releasable acrylic pressure-sensitive adhesive tape 17, the microparticle-containing viscoelastic substrate 15 and the thermal foaming agent-containing pressure-sensitive adhesive layer 14 each is protected by a release liner 13.

Production Process Example 2 of Thermally-foamable Re-Releasable Acrylic Pressure-sensitive adhesive Tape

The first step of Production Process Example 2 is a step of coating a thermal foaming agent-containing pressure-sensitive adhesive composition on a release-treated surface of a release liner 13 to form a thermal foaming agent-containing pressure-sensitive adhesive composition layer 12. In this step, a sheet where a thermal foaming agent-containing pressure-sensitive adhesive composition layer 12 is formed on a release-treated surface of a release liner 13 is produced. 2a shows the first step in Production Process Example 2.

The second step of Production Process Example 2 is a step of coating a thermal foaming agent-containing pressure-sensitive adhesive composition on a release-treated surface of a release liner 13 to form a thermal foaming agent-containing pressure-sensitive adhesive composition layer 12 and further stacking a microparticle-containing polymerizable composition layer 11 on the thermal foaming agent-containing pressure-sensitive adhesive composition layer 12. Incidentally, stacking of the microparticle-containing polymerizable composition layer 11 may be performed by coating a microparticle-containing polymerizable composition on the thermal foaming agent-containing pressure-sensitive adhesive composition layer 12 to form a microparticle-containing polymerizable composition layer 11 or by transferring a microparticle-containing polymerizable composition layer 11 formed on an appropriate release liner (separator) or the like, onto the thermal foaming agent-containing pressure-sensitive adhesive composition layer 12. In this step, a laminate having a thermal foaming agent-containing pressure-sensitive adhesive composition layer 12 on a release-treated surface of a release liner 13 and further having a microparticle-containing polymerizable composition layer 11 on the thermal foaming agent-containing pressure-sensitive adhesive composition layer 12 is produced. 2b shows the second step in Production Process Example 2.

The third step of Production Process Example 2 is a step of laminating the sheet produced in the first step with the laminate produced in the second step in a form of the thermal foaming agent-containing pressure-sensitive adhesive composition layer 12 coming into contact with the microparticle-containing polymerizable composition layer 11. In this step, a laminate having a thermal foaming agent-containing pressure-sensitive adhesive composition layer 12 on both surfaces of a microparticle-containing polymerizable composition layer 11 and further having a release liner 13 on both thermal foaming agent-containing pressure-sensitive adhesive layers 12 is produced. 2c shows the third step in Production Process Example 2.

The fourth step of Production Process Example 2 is a step of irradiating an active energy ray 16 on both surfaces of the laminate produced in the third step through a release liner 13. In this step, the microparticle-containing polymerizable composition layer 11 and the thermal foaming agent-containing pressure-sensitive adhesive composition layer 12 are photocured and become a microparticle-containing viscoelastic substrate 15 and a thermal foaming agent-containing pressure-sensitive adhesive layer 14, respectively. Incidentally, in the laminate, the thermal foaming agent-containing pressure-sensitive adhesive composition layer 12 is blocked from oxygen by the release liner 13. 2d shows the fourth step in Production Process Example 2.

2e shows a thermally-foamable re-releasable acrylic pressure-sensitive adhesive tape produced by Production Process Example 2. The thermally-foamable re-releasable acrylic pressure-sensitive adhesive tape 18 is a double-sided pressure-sensitive adhesive sheet with backing, having a thermal foaming agent-containing pressure-sensitive adhesive layer 14 on both surfaces of a microparticle-containing viscoelastic substrate 15, and furthermore, in the thermally-foamable re-releasable acrylic pressure-sensitive adhesive tape 18, the thermal foaming agent-containing pressure-sensitive adhesive layer 14 is protected by a release liner 13.

Production Process Example 3 of Thermally-foamable Re-Releasable Acrylic Pressure-sensitive adhesive Tape

The first step of Production Process Example 3 is a step of coating a thermal foaming agent-containing pressure-sensitive adhesive composition on a release-treated surface of a release liner 13 to form a thermal foaming agent-containing pressure-sensitive adhesive composition layer 12. In this step, a sheet where a thermal foaming agent-containing pressure-sensitive adhesive composition layer 12 is formed on a release-treated surface of a release liner 13 is produced. 3a shows the first step in Production Process Example 3.

The second step of Production Process Example 3 is a step of stacking a microparticle-containing polymerizable composition layer 11 on the thermal foaming agent-containing pressure-sensitive adhesive composition layer 12 of the sheet produced in the first step. Incidentally, stacking of the microparticle-containing polymerizable composition layer 11 may be performed by coating a microparticle-containing polymerizable composition on the thermal foaming agent-containing pressure-sensitive adhesive composition layer 12 to form a microparticle-containing polymerizable composition layer 11 or by transferring a microparticle-containing polymerizable composition layer 11 formed on an appropriate release liner (separator) or the like, onto the thermal foaming agent-containing pressure-sensitive adhesive composition layer 12. In this step, a laminate having a thermal foaming agent-containing pressure-sensitive adhesive composition layer 12 on a release-treated surface of a release liner 13 and further having a microparticle-containing polymerizable composition layer 11 on the thermal foaming agent-containing pressure-sensitive adhesive composition layer 12 is produced. 3b shows the second step in Production Process Example 3.

The third step of Production Process Example 3 is a step of stacking a thermal foaming agent-containing pressure-sensitive adhesive composition layer 12 on the microparticle-containing polymerizable composition layer 11 of the laminate produced in the second step. Incidentally, stacking of the thermal foaming agent-containing pressure-sensitive adhesive composition layer 12 may be performed by coating a thermal foaming agent-containing pressure-sensitive adhesive composition on the microparticle-containing polymerizable composition layer 11 to form a thermal foaming agent-containing pressure-sensitive adhesive composition layer 12 or by transferring a thermal foaming agent-containing pressure-sensitive adhesive composition layer 12 formed on an appropriate release liner (separator) or the like, onto the microparticle-containing polymerizable composition layer 11. In this step, a laminate having a thermal foaming agent-containing pressure-sensitive adhesive composition layer 12 on both surfaces of a microparticle-containing polymerizable composition layer 11 and further having a release liner 13 on one thermal foaming agent-containing pressure-sensitive adhesive layer 12 is produced. 3c shows the termination stage of the third step in Production Process Example 3.

The fourth step of Production Process Example 3 is a step of laminating a release liner 13 on the release liner-free thermal foaming agent-containing pressure-sensitive adhesive composition layer 12 of the laminate produced in the third step in a form of the release-treated surface of the release liner coming into contact with the thermal foaming agent-containing pressure-sensitive adhesive composition layer, and then irradiating an active energy ray 16 on both surfaces of the laminate through a release liner 13. In this step, the microparticle-containing polymerizable composition layer 11 and the thermal foaming agent-containing pressure-sensitive adhesive composition layer 12 are photocured and become a microparticle-containing viscoelastic substrate 15 and a thermal foaming agent-containing pressure-sensitive adhesive layer 14, respectively. Incidentally, in the laminate, the thermal foaming agent-containing pressure-sensitive adhesive composition layer 12 is blocked from oxygen by the release liner 13. 3d shows the fourth step in Production Process Example 3.

3e shows a thermally-foamable re-releasable acrylic pressure-sensitive adhesive tape produced by Production Process Example 3. The thermally-foamable re-releasable acrylic pressure-sensitive adhesive tape 18 is a double-sided pressure-sensitive adhesive sheet with backing, having a thermal foaming agent-containing pressure-sensitive adhesive layer 14 on both surfaces of a microparticle-containing viscoelastic substrate 15, and furthermore, in the thermally-foamable re-releasable acrylic pressure-sensitive adhesive tape 18, the thermal foaming agent-containing pressure-sensitive adhesive layer 14 is protected by a release liner 13.

The coating method used for coating a microparticle-containing polymerizable composition or a thermal foaming agent-containing pressure-sensitive adhesive composition on a release liner 13 or the like in each Production Process Example is not particularly limited and a normal method can be employed. Examples of the coating method include a slot die method, a reverse gravure coating method, a microgravure method, a dipping method, a spin coating method, a brush coating method, a roll coating method and a flexographic printing method. Also, as for the coating tool used at the coating, a generally employed coating tool may be used without any particular limitation. Examples of the coating tool include a roll coater such as reverse coater and gravure coater; a curtain coater; a lip coater, a die coater; and a knife coater.

In the step of photocuring the microparticle-containing polymerizable composition layer 11 or thermal foaming agent-containing pressure-sensitive adhesive composition layer 12 by using an active energy ray in each Production Process Example, oxygen is blocked using a release liner 13, but the method not using a release liner 13 includes a method where an inert gas such as nitrogen gas is used in place of a release liner 13. That is, the irradiation of an active energy ray is performed in an inert gas atmosphere such as nitrogen gas, whereby inhibition of the photopolymerization reaction by oxygen can be suppressed. In the case of photocuring the microparticle-containing polymerizable composition layer 11 and thermal foaming agent-containing pressure-sensitive adhesive composition layer 12 by using an active energy ray in an inert gas atmosphere such as nitrogen gas, the microparticle-containing polymerizable composition layer 11 and thermal foaming agent-containing pressure-sensitive adhesive composition layer 12 need not be coated by using a release liner 13.

In the case of photocuring the microparticle-containing polymerizable composition layer 11 and thermal foaming agent-containing pressure-sensitive adhesive composition layer 12 by using an active energy ray in an inert gas atmosphere such as nitrogen gas, oxygen is preferably not present as much as possible in the inert gas atmosphere and, for example, the oxygen concentration is preferably 5,000 ppm or less. Incidentally, in the microparticle-containing polymerizable composition layer 11 and thermal foaming agent-containing pressure-sensitive adhesive composition layer 12, if the amount of dissolved oxygen in the layer is large, radical generation is suppressed and polymerization may not proceed sufficiently, giving rise to adverse effect on the conversion, molecular weight and molecular weight distribution of the polymer obtained.

Examples of the active energy ray include ionizing radiation such as $\alpha$-ray, $\beta$-ray, $\gamma$-ray, neutron ray and electron beam, and an ultraviolet ray. Above all, an ultraviolet ray is suitable. The irradiation energy of the active energy ray or the irradiation time thereof is not particularly limited and may be sufficient if the photopolymerization initiator can be activated to bring about a reaction of the monomer components. Examples of the irradiation of the active energy ray include irradiation at a dose of approximately from 400 to 4,000 mJ/cm$^2$ of an ultraviolet ray with an illuminance of 1 to 200 mW/cm$^2$ at a wavelength of 300 to 400 nm.

In the case of photocuring the microparticle-containing polymerizable composition layer 11 and thermal foaming agent-containing pressure-sensitive adhesive composition layer 12 by using an active energy ray, the conversion is preferably 90 wt% or more. The unpolymerized monomer may be removed by providing a drying step. Here, the conversion can be calculated by the same method as the conversion of the above-described partial polymerization product.

As regards the light source used for the irradiation of an ultraviolet ray, a light source having a spectral distribution in the wavelength region of 180 to 460 nm (preferably from 300 to 400 nm) is used, and a general irradiation device such as chemical lamp, Blacklight (manufactured by Toshiba Lighting & Technology Corp.), mercury arc, carbon arc, low-pressure mercury lamp, medium-pressure mercury lamp, high-pressure mercury lamp, ultrahigh-pressure mercury lamp and metal halide lamp is used. In addition, an irradiation device that can emit electromagnetic radiation at a wavelength longer or shorter than the wavelength above may also be used.

The illuminance of the ultraviolet ray can be set to an objective illuminance by adjusting the distance from the irradiation device to the photocurable composition, that is, the microparticle-containing polymerizable composition layer 11 or the thermal foaming agent-containing pressure-sensitive adhesive composition layer 12, or the voltage.

The adherend to which the thermally-foamable re-releasable acrylic pressure-sensitive adhesive tape is applied is not particularly limited and an adherend of an appropriate shape or material is used. Examples of the material of the adherend include various resins such as polycarbonate, polypropylene, polyester, polystyrene, phenolic resin, epoxy resin, polyurethane, ABS and acrylic resin; and various metals such as iron, aluminum, copper, nickel and an alloy thereof.

The normal-state adhesive strength of the thermally-foamable re-releasable acrylic pressure-sensitive adhesive tape is 20 N/25 mm or more (for example, from 20 to 100 N/25 mm), preferably 21 N/25 mm or more (for example, from 21 to 90 N/25 mm), more preferably 22 N/25 mm or more (for example, from 22 to 80 N/25 mm). Also, the adhesive strength after heating of the thermally-foamable re-releasable acrylic pressure-sensitive adhesive tape is 20 N/25 mm or less (for example, from 0 to 20 N/25 mm), preferably 19 N/25 mm or less (for example, from 0 to 19 N/25 mm), more preferably 18 N/25 mm or less (for example, from 0 to 18 N/25 mm). Here, the normal-state adhesive strength of the thermally-foamable re-releasable acrylic pressure-sensitive adhesive tape is a value measured by the pressure-sensitive adhesive tape test method of JIS Z0237, and the adhesive strength after heating of the thermally-foamable re-releasable acrylic pressure-sensitive adhesive tape is a value measured by the pressure-sensitive adhesive tape test method of JIS Z0237 after a heat treatment (for example, a heat treatment at 130°C for 10 minutes).

The normal-state adhesive strength (pressure-sensitive adhesive performance) of the thermally-foamable re-releasable acrylic pressure-sensitive adhesive tape can be adjusted by appropriately selecting, for example, the components of the thermal foaming agent-containing pressure-sensitive adhesive layer, the kind or amount used of the thermal foaming agent, the irradiation method of an active energy ray at the production of the pressure-sensitive adhesive layer, or the thickness of the thermal foaming agent-containing pressure-sensitive adhesive layer.

Specific examples of the method for adjusting the normal-state adhesive strength by appropriately selecting the irradiation method of an active energy ray at the production of the pressure-sensitive adhesive layer include the method disclosed in JP-A-2003-13015. In the method disclosed in JP-A-2003-13015, the irradiation of an active energy ray is preformed in parts through a plurality of stages, whereby the pressure-sensitive adhesive performance is more precisely adjusted. Specifically, in the case of using an ultraviolet ray as the active energy ray, there may be used, for example, a method of performing the irradiation of an ultraviolet ray in parts through a first stage of irradiating light with an illuminance of 30 mW/cm$^2$ or more and a second stage of irradiating light with an illuminance lower than that in the first stage, thereby substantially completing the polymerization reaction; and a method of performing the irradiation of an ultraviolet light in parts through a first stage of irradiating light with an illuminance of 30 mW/cm$^2$ or more, a second stage of irradiating light with an illuminance lower than that in the first stage to achieve a conversion of at least 70%, and a third stage of irradiating light with an illuminance of 30 mW/cm$^2$ or more, thereby substantially completing the polymerization reaction.

Examples of the ultraviolet ray irradiation device used in the first stage above include a low-pressure mercury lamp, a high-pressure mercury lamp, an ultrahigh-pressure mercury lamp and a metal halide lamp. Examples of the irradiation device used in the second stage above include a chemical lamp and Blacklight.

By setting the adhesive strength to fall in the above-described range, the thermally-foamable re-releasable acrylic pressure-sensitive adhesive tape of the present invention can be easily separated or disassembled by reducing the adhesive strength under heating at the separation or disassembling of the bonded part while maintaining a high normal-state adhesive strength at the bonding to an adherend.

The thermally-foamable re-releasable acrylic pressure-sensitive adhesive tape of the present invention is used for various uses (for example, bonding of members) in various fields such as automobiles, mechanical parts, electric appliances and building materials. Furthermore, in the thermally-foamable re-releasable acrylic pressure-sensitive adhesive tape of the present invention, the thermal foaming agent-containing pressure-sensitive adhesive layer is foamed by heating and therefore, when the pressure-sensitive adhesive tape is heated after adhering to an adherend, the adhesive strength to the adherend decreases. Accordingly, the thermally-foamable re-releasable acrylic pressure-sensitive adhesive tape of the present invention is used as a pressure-sensitive adhesive tape easily re-releasable from an adherend. Furthermore, the thermally-foamable re-releasable acrylic pressure-sensitive adhesive tape of the present invention is used as pressure-sensitive adhesive sheets by shaping it into a sheet or tape form.

EXAMPLES

The present invention is described below by referring to Examples, but the present invention is not limited to these Examples by any means.

Preparation Example 1 of Thermal Foaming Agent-Containing Pressure-sensitive adhesive Composition

Into a four-neck flask, 94 Parts by weight of 2-ethylhexyl acrylate, 6 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 30 Parts by weight of a thermal foaming agent ("Matsumoto Microsphere F-50", trade names, produced by Matsumoto Yushi-Seiyaku Co., Ltd.) and 0.2 parts by weight of trimethylolpropane triacrylate were added, and these were uniformly mixed to obtain a thermal foaming agent-containing pressure-sensitive adhesive composition (sometimes referred to as Thermal Foaming Agent-Containing Pressure-sensitive adhesive Composition (A)).

Preparation Example 2 of Thermal Foaming Agent-Containing Pressure-sensitive adhesive Composition

Into a four-neck flask, 94 Parts by weight of 2-ethylhexyl acrylate, 6 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 30 Parts by weight of a thermal foaming agent ("Matsumoto Microsphere F-50", trade names, produced by Matsumoto Yushi-Seiyaku Co., Ltd.) and 0.5 parts by weight of trimethylolpropane triacrylate were added, and these were uniformly mixed to obtain a thermal foaming agent-containing pressure-sensitive adhesive composition (sometimes referred to as Thermal Foaming Agent-Containing Pressure-sensitive adhesive Composition (B)).

Preparation Example 3 of Thermal Foaming Agent-Containing Pressure-sensitive adhesive Composition

Into a four-neck flask, 92 Parts by weight of 2-ethylhexyl acrylate, 8 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 30 Parts by weight of a thermal foaming agent ("Matsumoto Microsphere F-50", trade names, produced by Matsumoto Yushi-Seiyaku Co., Ltd.) and 0.2 parts by weight of trimethylolpropane triacrylate were added, and these were uniformly mixed to obtain a thermal foaming agent-containing pressure-sensitive adhesive composition (sometimes referred to as Thermal Foaming Agent-Containing Pressure-sensitive adhesive Composition (C)).

Preparation Example 4 of Thermal Foaming Agent-Containing Pressure-sensitive adhesive Composition

Into a four-neck flask, 92 Parts by weight of 2-ethylhexyl acrylate, 8 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 30 Parts by weight of a thermal foaming agent ("Matsumoto Microsphere F-50", trade names, produced by Matsumoto Yushi-Seiyaku Co., Ltd.) and 0.5 parts by weight of trimethylolpropane triacrylate were added, and these were uniformly mixed to obtain a thermal foaming agent-containing pressure-sensitive adhesive composition (sometimes referred to as Thermal Foaming Agent-Containing Pressure-sensitive adhesive Composition (D)).

Preparation Example of Microparticle-Containing Polymerizable Composition

Into a four-neck flask, 90 Parts by weight of 2-ethylhexyl acrylate, 10 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 0.08 Parts by weight of 1,6-hexanediol acrylate and 9.5 parts by weight of a hollow glass bead ("CEL-STAR Z-27", trade name, produced by Tokai Kogyo Co., Ltd., average particle diameter: 60 $\mu$m, bulk specific gravity: 0.17 g/cm$^3$) were added, and these were uniformly mixed by using a propeller mixer to obtain a microparticle-containing polymerizable composition.

Preparation Example of Viscoelastic Composition

Into a four-neck flask, 90 Parts by weight of 2-ethylhexyl acrylate, 10 parts by weight of acrylic acid, 0.05 parts by weight of a photoinitiator ("Irgacure 184", trade name, produced by Ciba Specialty Chemicals Corp.) and 0.05 parts by weight of a photoinitiator ("Irgacure 651 ", trade name, produced by Ciba Specialty Chemicals Corp.) were charged and photopolymerized through exposure to an ultraviolet ray in a nitrogen atmosphere to obtain a partially polymerized monomer syrup in a conversion of 7%.

To 100 parts by weight of the partially polymerized monomer syrup, 0.1 Parts by weight of 1,6-hexanediol acrylate was added, and these were uniformly mixed to obtain a viscoelastic composition.

Use Example 1 of Release liner

As the release liner, a polyester film ("MRN-38, trade name, produced by Mitsubishi Polyester Film Corp.) with one surface being release-treated by a silicone-based release agent was used (sometimes referred to as Release liner (A)).

Use Example 2 of Release liner

As the release liner, a polyester film ("MRF-38, trade name, produced by Mitsubishi Polyester Film Corp.) with one surface being release-treated by a silicone-based release agent was used (sometimes referred to as Release liner (B)).

Example 1

Thermal Foaming Agent-Containing Pressure-sensitive adhesive Composition (A) was coated on the release-treated surface of Release liner (B) to a thickness of 50 $\mu$m to obtain a thermal foaming agent-containing pressure-sensitive adhesive composition layer sheet having a thermal foaming agent-containing pressure-sensitive adhesive composition layer on Release liner (B).

The microparticle-containing polymerizable composition was coated on the release-treated surface of Release liner (A) to a thickness of 800 $\mu$m to obtain a microparticle-containing polymerizable composition layer sheet having a microparticle-containing polymerizable composition layer on Release liner (A).

The thermal foaming agent-containing pressure-sensitive adhesive composition layer sheet was laminated to the microparticle-containing polymerizable composition layer sheet in a form of the microparticle-containing polymerizable composition layer coming into contact with the thermal foaming agent-containing pressure-sensitive adhesive composition layer, and oxygen was blocked by the coating, whereby a laminate sheet was obtained.

An ultraviolet ray (UV) having an illuminance of 5 mW/cm$^2$ and a maximum sensitivity of 350 nm was irradiated on both surfaces of the laminate sheet for 240 seconds by using a Blacklight lamp (manufactured by Toshiba Corp.) to photocure the microparticle-containing polymerizable composition layer and the thermal foaming agent-containing pressure-sensitive adhesive composition layer, whereby an acrylic pressure-sensitive adhesive tape having a thermal foaming agent-containing pressure-sensitive adhesive layer on one surface of a microparticle-containing viscoelastic substrate was produced.

Incidentally, the maximum sensitivity of the ultraviolet ray was measured using an industrial ultraviolet intensity meter, "UVR-T1", manufactured by Topcon Corp.

The gel fraction of the microparticle-containing viscoelastic substrate was 89%, and the gel fraction of the thermal foaming agent-containing pressure-sensitive adhesive layer was 84%.

Example 2

An acrylic pressure-sensitive adhesive tape was produced in the same manner as in Example 1 except that Thermal Foaming Agent-Containing Pressure-sensitive adhesive Composition (B) was coated on the release-treated surface of Release liner (B) to a thickness of 100 $\mu$m to obtain a thermal foaming agent-containing pressure-sensitive adhesive composition layer sheet having a thermal foaming agent-containing pressure-sensitive adhesive composition layer on Release liner (B).

The gel fraction of the thermal foaming agent-containing pressure-sensitive adhesive layer was 90%.

Example 3

An acrylic pressure-sensitive adhesive tape was produced in the same manner as in Example 1 except that Thermal Foaming Agent-Containing Pressure-sensitive adhesive Composition (C) was coated on the release-treated surface of Release liner (B) to a thickness of 100 $\mu$m to obtain a thermal foaming agent-containing pressure-sensitive adhesive composition layer sheet having a thermal foaming agent-containing pressure-sensitive adhesive composition layer on Release liner (B).

The gel fraction of the thermal foaming agent-containing pressure-sensitive adhesive layer was 87%.

Example 4

An acrylic pressure-sensitive adhesive tape was produced in the same manner as in Example 1 except that Thermal Foaming Agent-Containing Pressure-sensitive adhesive Composition (D) was coated on the release-treated surface of Release liner (B) to a thickness of 150 $\mu$m to obtain a thermal foaming agent-containing pressure-sensitive adhesive composition layer sheet having a thermal foaming agent-containing pressure-sensitive adhesive composition layer on Release liner (B).

The gel fraction of the thermal foaming agent-containing pressure-sensitive adhesive layer was 92%.

Comparative Example 1

The microparticle-containing polymerizable composition was coated on the release-treated surface of Release liner (A) to a thickness of 800 μm to form a microparticle-containing polymerizable composition layer. After laminating Release liner (A) on the microparticle-containing polymerizable composition layer in a form of the composition layer surface coming into contact with the release-treated surface, an ultraviolet ray (UV) having an illuminance of 5 mW/cm² and a maximum sensitivity of 350 nm was irradiated on both surfaces for 240 seconds by using a Blacklight lamp (manufactured by Toshiba Corp.) to photocure the microparticle-containing polymerizable composition layer, whereby an acrylic pressure-sensitive adhesive tape having a microparticle-containing pressure-sensitive adhesive layer was produced.

Incidentally, the maximum sensitivity of the ultraviolet ray was measured using an industrial ultraviolet intensity meter, "UVR-T1", manufactured by Topcon Corp.

Comparative Example 2

Thermal Foaming Agent-Containing Pressure-sensitive adhesive Composition (A) was coated on the release-treated surface of Release liner (A) to a thickness of 50 μm to form a thermal foaming agent-containing pressure-sensitive adhesive composition layer. After blocking oxygen by laminating Release liner (B) on the thermal foaming agent-containing pressure-sensitive adhesive composition layer in a form of the composition layer surface coming into contact with the release-treated surface, an ultraviolet ray (UV) having an illuminance of 5 mW/cm² and a maximum sensitivity of 350 nm was irradiated on both surfaces for 240 seconds by using a Blacklight lamp (manufactured by Toshiba Corp.) to form a thermal foaming agent-containing pressure-sensitive adhesive layer.

The viscoelastic composition prepared above was coated on the release-treated surface of Release liner (A) to a thickness of 50 μm to form a viscoelastic composition layer. Furthermore, after blocking oxygen by laminating Release liner (B) on the viscoelastic composition layer in a form of the composition layer surface coming into contact with the release-treated surface, thereby blocking oxygen, an ultraviolet ray (UV) having an illuminance of 5 mW/cm² and a maximum sensitivity of 350 nm was irradiated on both surfaces for 240 seconds by using a Blacklight lamp (manufactured by Toshiba Corp.) to produce a viscoelastic substrate.

Release liner (A) protecting the viscoelastic substrate and Release liner (A) protecting the thermal foaming agent-containing pressure-sensitive adhesive layer each was stripped off to expose the substrate and the pressure-sensitive adhesive layer, and the exposed substrate surface and the exposed pressure-sensitive adhesive surface were laminated together by a laminator roll to produce an acrylic pressure-sensitive adhesive tape having a thermal foaming agent-containing pressure-sensitive adhesive layer on one surface of a viscoelastic substrate.

Incidentally, the maximum sensitivity was measured using an industrial ultraviolet intensity meter, "UVR-T1", manufactured by Topcon Corp.

Comparative Example 3

An acrylic pressure-sensitive adhesive tape having a thermal foaming agent-containing pressure-sensitive adhesive layer on one surface of a viscoelastic substrate was produced in the same manner as in Comparative Example 2 except that Thermal Foaming Agent-Containing Pressure-sensitive adhesive Composition (B) was coated on the release-treated surface of Release liner (A) to a thickness of 100 μm to form a thermal foaming agent-containing pressure-sensitive adhesive composition layer.

Comparative Example 4

An acrylic pressure-sensitive adhesive tape having a thermal foaming agent-containing pressure-sensitive adhesive layer on one surface of a viscoelastic substrate was produced in the same manner as in Comparative Example 2 except that Thermal Foaming Agent-Containing Pressure-sensitive adhesive Composition (C) was coated on the release-treated surface of Release liner (A) to a thickness of 100 μm to form a thermal foaming agent-containing pressure-sensitive adhesive composition layer.

Comparative Example 5

An acrylic pressure-sensitive adhesive tape having a thermal foaming agent-containing pressure-sensitive adhesive layer on one surface of a viscoelastic substrate was produced in the same manner as in Comparative Example 2 except that Thermal Foaming Agent-Containing Pressure-sensitive adhesive Composition (D) was coated on the release-treated surface of Release liner (A) to a thickness of 150 μm to form a thermal foaming agent-containing pressure-sensitive adhesive composition layer.

Evaluation

Acrylic pressure-sensitive adhesive tapes produced in Examples 1 to 4 and Comparative Examples 1 to 5 each was measured for the adhesive strength to a coated plate in normal state as well as after heating and the adhesive strength to a PET film in normal state as well as after heating by the following (Measuring Method of Adhesive Strength to Coated Plate in Normal State), (Measuring Method of Adhesive Strength to Coated Plate After Heating), (Measuring Method of Adhesive Strength to PET Film in Normal State) and (Measuring Method of Adhesive Strength to PET film After Heating). The measurement results are shown in Table 1.
Also, the surface (magnification: 30 times) and cross-section (magnification: 100 times) of the thermal foaming agent-containing pressure-sensitive adhesive layer in the pressure-sensitive adhesive tape of Example 4 in normal state (before heating) as well as after heating were observed by a scanning electron microscope (SEM). The scanning electron microscope (SEM) used was S-4800 manufactured by Hitachi High-Technologies Corp.
Furthermore, the surface of the thermal foaming agent-containing pressure-sensitive adhesive layer in the pressure-sensitive adhesive tape of Example 4 in normal state (before heating) as well as after heating was also observed with an eye.

Production of Measurement Sample

With respect to the pressure-sensitive adhesive tapes produced in Examples 1 to 4, Release liner (A) on the microparticle-containing viscoelastic substrate side was peeled off to expose the microparticle-containing viscoelastic substrate, and a 38 μm-thick PET film with one surface being corona-treated ("Lumirror S-105", trade name, produced by Toray Industries, Inc.) was laminated by a laminator roll to the surface of the microparticle-containing viscoelastic substrate in a form of the corona-treated surface coming into contact with the microparticle-containing viscoelastic substrate surface to produce a pressure-sensitive adhesive tape where the 38 μm-thick PET film with one surface being corona-treated was the support. These pressure-sensitive adhesive tapes were cut into a tape width of 25 mm and used as the measurement samples of Examples 1 to 4. Incidentally, the measurement samples of Examples 1 to 4 eventually became a pressure-sensitive adhesive tape where the layer by the microparticle-containing viscoelastic substrate worked out to an intermediate layer between the support and the thermal foaming agent-containing pressure-sensitive adhesive layer.
With respect to the pressure-sensitive adhesive tape produced in Comparative Example 1, one Release liner (A) was peeled off to expose the microparticle-containing pressure-sensitive adhesive layer, and a 38 μm-thick PET film with one surface being corona-treated ("Lumirror S-105", trade name, produced by Toray Industries, Inc.) was laminated by a laminator roll to the surface of the pressure-sensitive adhesive layer in a form of the corona-treated surface coming into contact with the pressure-sensitive adhesive layer surface to produce a pressure-sensitive adhesive tape where the 38 μm-thick PET film with one surface being corona-treated was the support. This pressure-sensitive adhesive tape was cut into a tape width of 25 mm and used as the measurement sample of Comparative Example 1. Incidentally, the measurement sample of Comparative Example 1 eventually became a pressure-sensitive adhesive tape comprising a support and a microparticle-containing pressure-sensitive adhesive layer.
With respect to the pressure-sensitive adhesive tapes produced in Comparative Examples 2 to 5, Release liner (B) on the viscoelastic substrate side was peeled off to expose the viscoelastic substrate, and a 38 μm-thick PET film with one surface being corona-treated ("Lumirror S-105", trade name, produced by Toray Industries, Inc.) was laminated by a laminator roll to the surface of the viscoelastic substrate in a form of the corona-treated surface coming into contact with the viscoelastic substrate surface to produce a pressure-sensitive adhesive tape where the 38 μm-thick PET film with one surface being corona-treated was the support. These pressure-sensitive adhesive tapes were cut into a tape width of 25 mm and used as the measurement samples of Comparative Examples 2 to 5. Incidentally, the measurement samples of Comparative Examples 2 to 5 eventually became a pressure-sensitive adhesive tape where the layer by the microparticle-free viscoelastic substrate worked out to an intermediate layer between the support and the thermal foaming agent-containing pressure-sensitive adhesive layer.

Measuring Method of Adhesive Strength to Coated Plate at Normal Time

The measurement sample was press-bonded to a clean coated plate ("K-1210TW", trade name, produced by Kansai Paint Co., Ltd.) by passing a 5-kg roller one way over the sample in an atmosphere of 23°C and aged at about 23°C for 12 hours or more. After aging, the measurement sample was peeled off at a pulling rate of 300 mm/min to a 180° peel direction in an atmosphere of 23°C, whereby the adhesive strength to a coated plate in normal state was measured.

Measuring Method of Adhesive Strength to Coated Plate After Heating

The measurement sample was press-bonded to a clean coated plate ("K-1210TW", trade name, produced by Kansai Paint Co., Ltd.) by passing a 5-kg roller one way over the sample in an atmosphere of 23°C and aged at about 23°C for 12 hours or more. After aging, the measurement sample with the coated plate was placed in a hot-air drier and heat-treated at 130°C for 10 minutes. After the completion of heat treatment, the measurement sample was left standing at 23°C for 1 hour and then peeled off at a pulling rate of 300 mm/min to a 180° peel direction in an atmosphere of 23°C, whereby the adhesive strength to a coated plate after heating was measured.

Measuring Method of Adhesive Strength to PET Film at Normal Time

A double-sided tape ("No. 591 ", trade name, produced by Nitto Denko Corp.) was laminated to the support-side surface of the measurement sample in an atmosphere of 23°C, and the measurement sample was fixed to a rigid and smooth metal sheet (stainless steel sheet: 430BA). Thereafter, a 25 $\mu$m-thick PET film ("Lumirror S-10", trade name, produced by Toray Industries, Inc.) was press-bonded to the pressure-sensitive adhesive layer surface of the measurement sample fixed to the stainless steel sheet, by passing a 5-kg roller one way over the film and aged at about 23°C for 12 hours or more. After aging, the 25 $\mu$m-thick PET film was peeled off at a pulling rate of 300 mm/min to a 180° peel direction in an atmosphere of 23°C, whereby the adhesive strength to a PET film in normal state was measured.

Measuring Method of Adhesive Strength to PET Film After Heating

A double-sided tape ("No. 591 ", trade name, produced by Nitto Denko Corp.) was laminated to the support-side surface of the measurement sample in an atmosphere of 23°C, and the measurement sample was fixed to a rigid and smooth metal sheet (stainless steel sheet: 430BA). Thereafter, a 25 $\mu$m-thick PET film ("Lumirror S-10", trade name, produced by Toray Industries, Inc.) was press-bonded to the pressure-sensitive adhesive layer surface of the measurement sample fixed to the stainless steel sheet, by passing a 5-kg roller one way over the film and aged at about 23°C for 12 hours or more. After aging, the measurement sample with the stainless steel was placed in a hot-air drier and heat-treated at 130°C for 10 minutes. After the completion of heat-treatment, the measurement sample was left standing at 23°C for 1 hours and then, the 25 $\mu$m-thick PET film was peeled off at a pulling rate of 300 mm/min to a 180° peel direction in an atmosphere of 23°C, whereby the adhesive strength to a PET film after heating was measured.

Table 1

| | | Coated Plate | | PET Film | |
|---|---|---|---|---|---|
| | | Adhesive Strength in Normal State (N/25 mm) | Adhesive State After Heating (N/25 mm) | Adhesive Strength in Normal State (N/25 mm) | Adhesive State After Heating (N/25 mm) |
| | Example 1 | 33 | 19 | 26 | 11 |
| | Example 2 | 29 | 0 | 21 | 0.1 |
| | Example 3 | 29 | 13 | 23 | 3 |
| | Example 4 | 30 | 0 | 18 | 0.1 |
| | Comparative Example 1 | 30 | 34 | 21 | 24 |
| | Comparative Example 2 | 9 | × | 14 | × |
| | Comparative Example 3 | 8 | × | 9 | × |
| | Comparative Example 4 | 12 | × | 11 | × |
| | Comparative Example 5 | 10 | × | 8 | × |

In Table 1, "x" indicates occurrence of a phenomenon (delamination phenomenon) that as a result of foaming of the thermal foaming agent-containing pressure-sensitive adhesive layer, the thermal foaming agent-containing pressure-sensitive adhesive layer in the measurement sample separates from both the adherend and the intermediate layer (a layer by the microparticle-containing viscoelastic substrate or a layer by the microparticle-free viscoelastic substrate).

A delamination phenomenon occurred in the measurement samples of Comparative Examples 2 to 5 where a layer by the microparticle-free viscoelastic substrate worked out to an intermediate layer, whereas a delamination phenomenon was not brought about in the measurement samples of Examples 1 to 4 where a layer by the microparticle-containing viscoelastic substrate worked out to an intermediate layer. This reveals that in the pressure-sensitive adhesive tapes of Examples 1 to 4, even when the thermal foaming agent-containing pressure-sensitive adhesive layer is foamed by heating, a phenomenon of the thermal foaming agent-containing pressure-sensitive adhesive layer in the measurement sample separating from both the adherend and the microparticle-containing viscoelastic substrate does not occur.

In the measurement sample of Comparative Example 1 not having a layer by a microparticle-containing viscoelastic substrate as an intermediate layer, the adhesive strength after heating is large as compared with the adhesive strength in normal state (before heating), whereas in the measurement samples of Examples 1 to 4 having a layer by a microparticle-containing viscoelastic substrate as an intermediate layer, the adhesive strength after heating was small as compared with the adhesive strength in normal state (before heating). This reveals that in the case of pressure-sensitive adhesive tapes of Examples 1 to 4, the tape can be easily peeled off from the adherend by heating.

Also, in Examples 2 and 4 where trimethylolpropane acrylate was added in an amount of 0.5 parts by weight, the adhesive strength after heating was small as compared with that in Examples 1 and 3 where trimethylolpropane acrylate was added in an amount of 0.2 parts by weight. This reveals that in the case of pressure-sensitive adhesive tapes of Examples 2 and 4, the tape can be more easily peeled off from the adherend than in the case of pressure-sensitive adhesive tapes of Examples 1 and 3.

From these results, the pressure-sensitive adhesive tapes of Examples 1 to 4 are confirmed to maintain a strong adhesive strength at the lamination to an adherend but become easily releasable by heating.

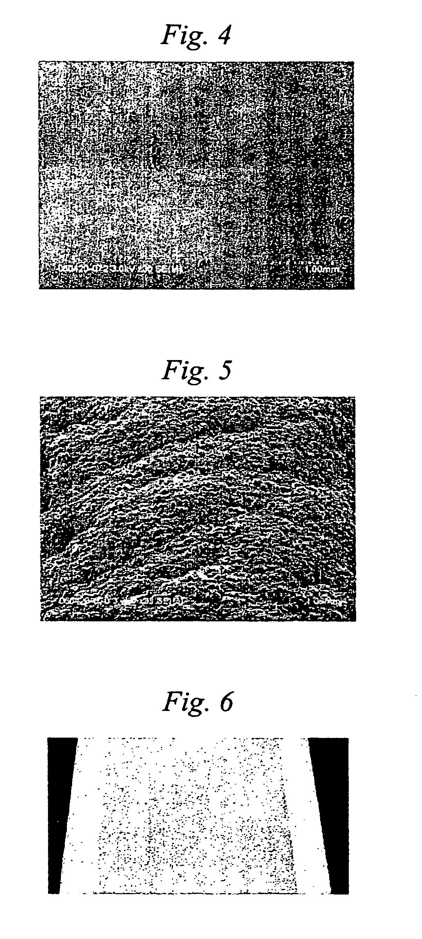

From the scanning electron micrograph of Fig. 4 showing the thermal foaming agent-containing pressure-sensitive adhesive layer surface in normal state (before heating and foaming) in Example 4, it is confirmed that the pressure-sensitive adhesive tape of Example 4 has a smooth surface on the pressure-sensitive adhesive surface in normal state and is suitable for lamination.

From the scanning electron micrograph of Fig. 5 showing the thermal foaming agent-containing pressure-sensitive adhesive layer surface after heating and foaming in Example 4, it is confirmed that characteristic unevenness is produced on the surface. By virtue of this unevenness, the pressure-sensitive adhesive tape of Example 4 is reduced in the adherence to an adherend and can be easily peeled off from the adherend.

Also from the photograph of Fig. 6 showing the thermal foaming agent-containing pressure-sensitive adhesive layer surface in normal state (before heating and foaming) in Example 4, it is confirmed that the pressure-sensitive adhesive tape of Example 4 has a smooth surface on the pressure-sensitive adhesive surface in normal state and is suitable for lamination.

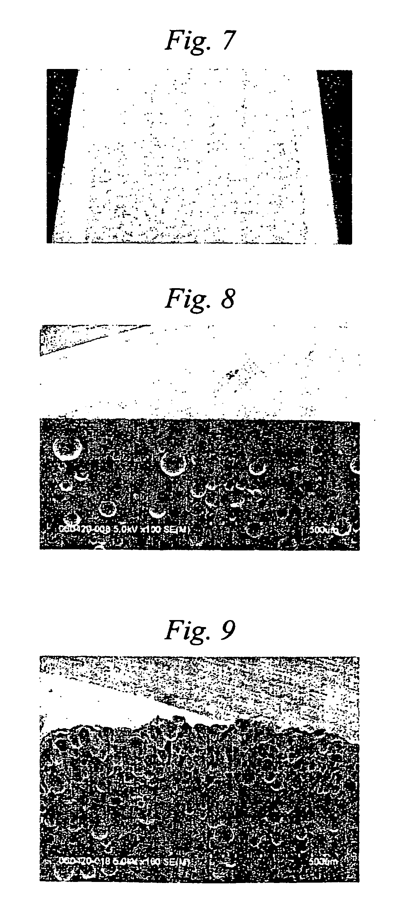

Also from the photograph of Fig. 7 showing the thermal foaming agent-containing pressure-sensitive adhesive layer surface after heating and foaming in Example 4, it is confirmed that characteristic unevenness is produced on the surface.

From the scanning electron micrograph of Fig. 8 showing the cross-section of the thermal foaming agent-containing pressure-sensitive adhesive layer in normal state (before heating and foaming) in Example 4, it is confirmed that the interlayer compatibility between the thermal foaming agent-containing pressure-sensitive adhesive layer and the microparticle-containing viscoelastic substrate is good.

From the scanning electron micrograph of Fig. 9 showing the cross-section of the thermal foaming agent-containing pressure-sensitive adhesive layer after heating and foaming in Example 4, it is confirmed that the thermal foaming agent-containing pressure-sensitive adhesive layer is foamed by heating and the thermal foaming agent-containing pressure-sensitive adhesive layer surface becomes uneven.

While the invention has been described in detail and with reference to specific embodiments thereof, it will be apparent to one skilled in the art that various changes and modifications can be made therein without departing from the spirit and scope thereof.

This application is based on Japanese Patent Application (Japanese Patent Application No. 2006-305307) filed on November 10, 2006, which is incorporated herein by reference herein in its entirety.

Furthermore, all references cited herein are incorporated by reference herein in their entirety.

INDUSTRIAL APPLICABILITY

By virtue of having the above-described constructions, the thermally-foamable re-releasable acrylic pressure-sensitive adhesive tape of the present invention can be easily separated or disassembled by reducing the adhesive strength under heating at the separation or disassembling of the bonded part while maintaining a high normal-state adhesive strength at the bonding.

**Claims**

1. A thermally-foamable re-releasable acrylic pressure-sensitive adhesive tape or sheet comprising:

   a microparticle-containing viscoelastic substrate, and
   a thermal foaming agent-containing pressure-sensitive adhesive layer provided on at least one surface of the microparticle-containing viscoelastic substrate.

2. The thermally-foamable re-releasable acrylic pressure-sensitive adhesive tape or sheet according to claim 1, wherein the microparticle-containing viscoelastic substrate is a layer obtained by polymerizing a microparticle-containing polymerizable composition containing a vinyl monomer mixture comprising as a main monomer an alkyl (meth) acrylate having an alkyl group which has a carbon number of 2 to 18, or a partial polymerization product thereof, a photopolymerization initiator, microparticles, and a polyfunctional (meth)acrylate.

3. The thermally-foamable re-releasable acrylic pressure-sensitive adhesive tape or sheet according to claim 2, wherein the microparticle-containing polymerizable composition contains 0.001 to 5 parts by weight of the photopolymerization initiator and 0.001 to 5 parts by weight of the polyfunctional (meth)acrylate based on 100 parts by weight of total monomer components in the vinyl monomer mixture comprising as the main component the alkyl (meth)acrylate having the alkyl group which has a carbon number of 2 to 18, or the partial polymerization product thereof.

4. The thermally-foamable re-releasable acrylic pressure-sensitive adhesive tape or sheet according to any one of claims 1 to 3, wherein the microparticles in the microparticle-containing viscoelastic substrate have an average particle diameter of 1 to 500 $\mu$m.

5. The thermally-foamable re-releasable acrylic pressure-sensitive adhesive tape or sheet according to claim 4, wherein the microparticles in the microparticle-containing viscoelastic substrate have an average particle diameter of 30 to 100 $\mu$m.

6. The thermally-foamable re-releasable acrylic pressure-sensitive adhesive tape or sheet according to any one of claims 1 to 5, wherein the microparticle-containing viscoelastic substrate contains 5 to 50 vol% of the microparticles based on the total volume of the microparticle-containing viscoelastic substrate.

7. The thermally-foamable re-releasable acrylic pressure-sensitive adhesive tape or sheet according to any one of claims 1 to 6, wherein the thermal foaming agent-containing pressure-sensitive adhesive layer is a layer obtained by polymerizing a thermal foaming agent-containing pressure-sensitive adhesive composition containing a vinyl monomer mixture comprising as a main component an alkyl (meth)acrylate having an alkyl group which has a carbon number of 2 to 18, or a partial polymerization product thereof, a photopolymerization initiator, a thermal foaming agent and a polyfunctional (meth)acrylate, and the thermal foaming agent-containing pressure-sensitive adhesive layer has a gel fraction of 50 to 99 wt%.

8. The thermally-foamable re-releasable acrylic pressure-sensitive adhesive tape or sheet according to claim 7, wherein the thermal foaming agent-containing pressure-sensitive adhesive composition contains 0.001 to 5 parts by weight of the photopolymerization initiator, 5 to 60 parts by weight of the thermal foaming agent and 0.001 to 5 parts by weight of the polyfunctional (meth)acrylate based on 100 parts by weight of total monomer components in the vinyl monomer mixture comprising as the main component the alkyl (meth)acrylate having the alkyl group which has a carbon number of 2 to 18, or the partial polymerization product thereof.

9. The thermally-foamable re-releasable acrylic pressure-sensitive adhesive tape or sheet according to any one of claims 1 to 8, wherein the thermal foaming agent in the thermal foaming agent-containing pressure-sensitive adhesive layer is a thermally-expandable microsphere.

10. The thermally-foamable re-releasable acrylic pressure-sensitive adhesive tape or sheet according to any one of claims 1 to 9, wherein the thermal foaming agent-containing pressure-sensitive adhesive layer has a thickness of 1 to 300 $\mu$m.

11. The thermally-foamable re-releasable acrylic pressure-sensitive adhesive tape or sheet as claimed in claim 10, wherein the thermal foaming agent-containing pressure-sensitive adhesive layer has a thickness of 30 to 200 $\mu$m.

12. The thermally-foamable re-releasable acrylic pressure-sensitive adhesive tape or sheet according to claim 2, wherein the microparticle-containing polymerizable composition further contains a copolymerizable monomer.

13. The thermally-foamable re-releasable acrylic pressure-sensitive adhesive tape or sheet according to claim 7, wherein the thermal foaming agent-containing pressure-sensitive adhesive composition further contains a copolymerizable monomer.

14. A method comprising heating an adherend on which the thermally-foamable re-releasable acrylic pressure-sensitive adhesive tape or sheet according to any one of claims 1 to 13 has been attached.

15. Use of the thermally-foamable re-releasable acrylic pressure-sensitive adhesive tape or sheet according to any one of claims 1 to 13 for bonding of members in the field of automobiles, mechanical parts, electric appliances, or building materials.

**Patentansprüche**

1. Thermisch aufschäumbares, wieder abziehbares Acrylhaftklebeband oder -folie umfassend:

   ein Mikropartikel enthaltendes viskoelastisches Substrat, und
   eine ein thermisches Treibmittel enthaltende Haftklebeschicht, die auf wenigstens einer Oberfläche des Mikropartikel enthaltenden viskoelastischen Substrats bereitgestellt ist.

2. Thermisch aufschäumbares, wieder abziehbares Acrylhaftklebeband oder -folie nach Anspruch 1, wobei das Mikropartikel enthaltende viskoelastische Substrat eine Schicht ist, die erhalten wird durch Polymerisieren einer Mikropartikel enthaltenden polymerisierbaren Zusammensetzung enthaltend eine Vinylmonomermischung umfassend als Hauptmonomer ein Alkyl(meth)acrylat mit einer Alkylgruppe, welche eine Kohlenstoffzahl von 2 bis 18 aufweist, oder ein teilweises Polymerisationsprodukt davon, einen Fotopolymerisationsinitiator, Mikropartikel und ein polyfunktionelles (Meth)acrylat.

3. Thermisch aufschäumbares, wieder abziehbares Acrylhaftklebeband oder -folie nach Anspruch 2, wobei die Mikropartikel enthaltende polymerisierbare Zusammensetzung 0,001 bis 5 Gewichtsteile des Fotopolymerisationsinitiators und 0,001 bis 5 Gewichtsteile des polyfunktionellen (Meth)acrylats, bezogen auf 100 Gewichtsteile der gesamten Monomerkomponenten in der Vinylmonomermischung umfassend als die Hauptkomponente das Alkyl(meth)acrylat mit der Alkylgruppe, welche eine Kohlenstoffzahl von 2 bis 18 aufweist, oder dem teilweisen Polymerisationsprodukt davon, enthält.

4. Thermisch aufschäumbares, wieder ablösbares Acrylhaftklebeband oder -folie nach einem der Ansprüche 1 bis 3, wobei die Mikropartikel in dem Mikropartikel enthaltenden viskoelastischen Substrat einen mittleren Partikeldurchmesser von 1 bis 500 $\mu$m aufweisen.

5. Thermisch aufschäumbares, wieder ablösbares Acrylhaftklebeband oder -folie nach Anspruch 4, wobei die Mikropartikel in dem Mikropartikel enthaltenden viskoelastischen Substrat einen mittleren Partikeldurchmesser von 30 bis 100 $\mu$m aufweisen.

6. Thermisch aufschäumbares, wieder ablösbares Acrylhaftklebeband oder -folie nach einem der Ansprüche 1 bis 5, wobei das Mikropartikel enthaltende viskoelastische Substrat 5 bis 50 Vol.-% der Mikropartikel, bezogen auf das Gesamtvolumen des Mikropartikel enthaltenden viskoelastischen Substrats, enthält.

7. Thermisch aufschäumbares, wieder ablösbares Acrylhaftklebeband oder -folie nach einem der Ansprüche 1 bis 6, wobei die thermisches Treibmittel enthaltende Haftklebeschicht eine Schicht ist, die erhalten wird durch Polymerisieren einer thermisches Treibmittel enthaltenden Haftklebstoffzusammensetzung enthaltend eine Vinylmonomermischung umfassend als eine Hauptkomponente ein Alkyl(meth)acrylat mit einer Alkylgruppe, welche eine Kohlenstoffzahl von 2 bis 18 aufweist, oder ein teilweises Polymerisationsprodukt davon, einen Fotopolymerisationsinitiator, ein thermisches Treibmittel und ein polyfunktionelles (Meth)acrylat, wobei die thermisches Treibmittel enthaltende Haftklebeschicht eine Gelfraktion von 50 bis 99 Gew.-% aufweist.

8.  Thermisch aufschäumbares, wieder abziehbares Acrylhaftklebeband oder -folie nach Anspruch 7, wobei die thermisches Treibmittel enthaltende Haftklebstoffzusammensetzung 0,001 bis 5 Gewichtsteile des Fotopolymerisationsinitiators, 5 bis 60 Gewichtsteile des thermischen Treibmittels und 0,001 bis 5 Gewichtsteile des polyfunktionellen (Meth)acrylats, bezogen auf 100 Gewichtsteile der gesamten Monomerkomponenten in der Vinylmonomermischung umfassend als die Hauptkomponente das Alkyl(meth)acrylat mit der Alkylgruppe, welche eine Kohlenstoffzahl von 2 bis 18 aufweist, oder dem teilweisen Polymerisationsprodukt davon, enthält.

9.  Thermisch aufschäumbares, wieder abziehbares Acrylhaftklebeband oder -folie nach einem der Ansprüche 1 bis 8, wobei das thermische Treibmittel in der thermisches Treibmittel enthaltenden Haftklebeschicht eine thermisch verschäumbare Mikrokugel ist.

10. Thermisch aufschäumbares, wieder abziehbares Acrylhaftklebeband oder -folie nach einem der Ansprüche 1 bis 9, wobei die thermisches Treibmittel enthaltende Haftklebeschicht eine Dicke von 1 bis 300 $\mu$m aufweist.

11. Thermisch aufschäumbares, wieder abziehbares Acrylhaftklebeband oder -folie nach Anspruch 10, wobei die thermisches Treibmittel enthaltende Haftklebeschicht eine Dicke von 30 bis 200 $\mu$m aufweist.

12. Thermisch aufschäumbares, wieder abziehbares Acrylhaftklebeband oder -folie nach Anspruch 2, wobei die Mikropartikel enthaltende polymerisierbare Zusammensetzung außerdem ein copolymerisierbares Monomer enthält.

13. Thermisch aufschäumbares, wieder abziehbares Acrylhaftklebeband oder -folie nach Anspruch 7, wobei die thermisches Treibmittel enthaltende Haftklebstoffzusammensetzung außerdem ein copolymerisierbares Monomer enthält.

14. Verfahren umfassend das Erwärmen eines Adhärenden, an dem das thermisch aufschäumbare, wieder abziehbare Acrylhaftklebeband oder -folie nach einem der Ansprüche 1 bis 13 befestigt worden ist.

15. Verwendung des thermisch aufschäumbaren, wieder abziehbaren Acrylhaftklebebands oder -folie nach einem der Ansprüche 1 bis 13 zum Verbinden von Elementen auf dem Gebiet von Automobilen, mechanischen Teilen, elektrischen Geräten oder Baumaterialien.

**Revendications**

1.  Bande ou feuille adhésive sensible à la pression acrylique repositionnable thermo-expansible comprenant :

    un substrat viscoélastique contenant des micro-particules, et
    une couche d'adhésif sensible à la pression contenant un agent d'expansion thermique disposée sur au moins une surface du substrat viscoélastique contenant des microparticules.

2.  Bande ou feuille adhésive sensible à la pression acrylique repositionnable thermo-expansible selon la revendication 1, dans laquelle le substrat viscoélastique contenant des microparticules est une couche obtenue par polymérisation d'une composition polymérisable contenant des microparticules et contenant un mélange de monomères vinyliques comprenant, à titre de monomère principal, un (méth)acrylate d'alkyle dont le groupe alkyle a de 2 à 18 carbones, ou un produit de polymérisation partielle de celui-ci, un amorceur de photopolymérisation, des microparticules, et un (méth)acrylate polyfonctionnel.

3.  Bande ou feuille adhésive sensible à la pression acrylique repositionnable thermo-expansible selon la revendication 2, dans laquelle la composition polymérisable contenant des microparticules contient 0,001 à 5 parties en poids de l'amorceur de photopolymérisation et 0,001 à 5 parties en poids du (méth)acrylate polyfonctionnel pour 100 parties en poids des composants monomères totaux dans le mélange de monomères vinyliques comprenant, à titre de composant principal, le (méth)acrylate d'alkyle dont le groupe alkyle a de 2 à 18 carbones, ou le produit de polymérisation partielle de celui-ci.

4.  Bande ou feuille adhésive sensible à la pression acrylique repositionnable thermo-expansible selon l'une quelconque des revendications 1 à 3, dans laquelle les microparticules dans le substrat viscoélastique contenant des microparticules ont une granulométrie moyenne de 1 à 500 μm.

5. Bande ou feuille adhésive sensible à la pression acrylique repositionnable thermo-expansible selon la revendication 4, dans laquelle les microparticules dans le substrat viscoélastique contenant des microparticules ont une granulométrie moyenne de 30 à 100 μm.

6. Bande ou feuille adhésive sensible à la pression acrylique repositionnable thermo-expansible selon l'une quelconque des revendications 1 à 5, dans laquelle le substrat viscoélastique contenant des microparticules contient 5 à 50 % en volume de microparticules par rapport au volume total du substrat viscoélastique contenant des microparticules.

7. Bande ou feuille adhésive sensible à la pression acrylique repositionnable thermo-expansible selon l'une quelconque des revendications 1 à 6, dans laquelle la couche d'adhésif sensible à la pression contenant un agent d'expansion thermique est une couche obtenue par polymérisation d'une composition d'adhésif sensible à la pression contenant un agent d'expansion thermique et contenant un mélange de monomères vinyliques comprenant, à titre de composant principal, un (méth)acrylate d'alkyle dont le groupe alkyle a de 2 à 18 carbones, ou un produit de polymérisation partielle de celui-ci, un amorceur de photopolymérisation, un agent d'expansion thermique et un (méth)acrylate polyfonctionnel, et la couche d'adhésif sensible à la pression contenant un agent d'expansion thermique a une fraction de gel de 50 à 99 % en poids.

8. Bande ou feuille adhésive sensible à la pression acrylique repositionnable thermo-expansible selon la revendication 7, dans laquelle la composition d'adhésif sensible à la pression contenant un agent d'expansion thermique contient 0,001 à 5 parties en poids de l'amorceur de photopolymérisation, 5 à 60 parties en poids de l'agent d'expansion thermique et 0,001 à 5 parties en poids du (méth)acrylate polyfonctionnel pour 100 parties en poids des composants monomères totaux dans le mélange de monomères vinyliques comprenant, à titre de composant principal, le (méth)acrylate d'alkyle dont le groupe alkyle a de 2 à 18 carbones ou le produit de polymérisation partielle de celui-ci.

9. Bande ou feuille adhésive sensible à la pression acrylique repositionnable thermo-expansible selon l'une quelconque des revendications 1 à 8, dans laquelle l'agent d'expansion thermique dans la couche d'adhésif sensible à la pression contenant un agent d'expansion thermique est une microsphère thermo-expansible.

10. Bande ou feuille adhésive sensible à la pression acrylique repositionnable thermo-expansible selon l'une quelconque des revendications 1 à 9, dans laquelle la couche d'adhésif sensible à la pression contenant un agent d'expansion thermique a une épaisseur de 1 à 300 μm.

11. Bande ou feuille adhésive sensible à la pression acrylique repositionnable thermo-expansible selon la revendication 10, dans laquelle la couche d'adhésif sensible à la pression contenant un agent d'expansion thermique a une épaisseur de 30 à 200 μm.

12. Bande ou feuille adhésive sensible à la pression acrylique repositionnable thermo-expansible selon la revendication 2, dans laquelle la composition polymérisable contenant des microparticules contient en outre un monomère copolymérisable.

13. Bande ou feuille adhésive sensible à la pression acrylique repositionnable thermo-expansible selon la revendication 7, dans laquelle la composition d'adhésif sensible à la pression contenant un agent d'expansion thermique contient en outre un monomère copolymérisable.

14. Procédé comprenant le chauffage d'un substrat à coller, sur lequel a été attachée la bande ou feuille adhésive sensible à la pression acrylique repositionnable thermo-expansible selon l'une quelconque des revendications 1 à 13.

15. Utilisation de la bande ou feuille adhésive sensible à la pression acrylique repositionnable thermo-expansible selon l'une quelconque des revendications 1 à 13 pour coller des éléments dans le domaine des automobiles, des pièces mécaniques, des appareils électriques, ou des matériaux de construction.

## Fig. 1

1a

13

11

1b

13

11

13

12

1c

13

11

13

12

1d

16

13

11

13

12

16

1e

15

13

13

14

17

# Fig. 2

**2a**

**2b**

**2c**

**2d**

16

16

**2e**

*Fig. 3*

3a

13

12

3b

13

12

11

3c

13

11

12

12

3d

16

13

11

12

12

13

16

3e

13

14

15

18

13

14

*Fig. 4*

*Fig. 5*

*Fig. 6*

*Fig. 7*

*Fig. 8*

*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57017030 B
- US 4223067 A
- JP 7048549 A
- JP 2001212900 A
- JP 2002088320 A

- JP 2002003800 A
- JP 2002121505 A
- JP 2004018761 A
- JP 2003013015 A
- JP 2006305307 A